# EUROPÄISCHE PATENTSCHRIFT

(11) **EP 1 366 557 B1**
(45) Veröffentlichungstag und Bekanntmachung des Hinweises auf die Patenterteilung: **02.12.2009**
(21) Anmeldenummer: 02700243.5
(22) Anmeldetag: 15.02.2002
(51) Int. Cl.: H02K 3/28, H02K 3/12, H02K 3/50

(54) **WICKLUNGSAUFBAU FÜR ELEKTRISCHE MASCHINE SOWIE VERFAHREN ZUR HERSTELLUNG DERSELBEN**
WINDING STRUCTURE FOR AN ELECTRICAL MACHINE AND METHOD FOR PRODUCING THE SAME
STRUCTURE DE BOBINAGE POUR UNE MACHINE ELECTRIQUE ET PROCEDE DE FABRICATION D'UNE STRUCTURE DE BOBINAGE POUR UNE MACHINE ELECTRIQUE

(30) Priorität: 09.03.2001 DE 10111509; 04.04.2001 DE 10116831
(43) Veröffentlichungstag der Anmeldung: 03.12.2003
(73) Patentinhaber: TEMIC Automotive Electric Motors GmbH, 10553 Berlin (DE)
(72) Erfinder: HOLZHEU, Georg, 89956 Schongau (DE); MASBERG, Ulrich, 51503 Rösrath (DE); MENHART, Michael, 86859 Holzhausen-Igling (DE); GRÜNDL, Andreas, 81377 München (DE); HOFFMANN, Bernhard, 82319 Starnberg (DE); RASCH, Reinhard, 82229 Heckendorf (DE)
(74) Vertreter: Pröll, Jürgen
(86) Internationale Anmeldenummer: PCT/EP2002/001647
(87) Internationale Veröffentlichungsnummer: WO 2002/073773

(56) Entgegenhaltungen:
- US-A- 4 309 634
- US-A- 5 196 752
- US-A- 5 804 902
- PATENT ABSTRACTS OF JAPAN vol. 2000, no. 19, 5. Juni 2001 (2001-06-05) -& JP 2001 037131 A (MITSUBISHI ELECTRIC CORP), 9. Februar 2001 (2001-02-09)

## Beschreibung

Die Erfindung betrifft den Aufbau von Wicklungen für elektrische Maschinen, und insbesondere den Aufbau von mehrphasigen Wicklungen mit mehreren parallel geschalteten Spulen oder Spulengruppen.

Elektrische Maschinen (z.B. Asynchron- oder Synchronmaschinen in Rotations-oder Linearbauart, wobei mit dem Begriff "elektrische Maschinen" sowohl Motoren als auch Generatoren gemeint sind) sind im allgemeinen mit einer Wicklung ausgestattet. Der durch diese fließende Strom erzeugt ein wanderndes magnetisches Feld, dessen Wirkung über den Luftspalt zwischen Ständer und Läufer hinweg die Bewegung des Läufers hervorruft. Die Wicklung ist i.a. in den Nuten eines Ständer- bzw. Läuferkörpers aufgenommen, die bei einer Radialfeldmaschine in der Regel parallel oder in einem kleinen Winkel zur Drehachse verlaufen.

Bei einer Mehrphasen-Wechselstrommaschine hat die Wicklung i.a. eine der Anzahl der Phasen entsprechende Anzahl von Strängen, die zumeist jeweils mehrere Spulen mit einer oder mehreren Windungen umfassen. Jede Spule liegt in der Regel mit ihren beiden sog. "Spulenseiten" in den Nuten, während die sog. Wickelköpfe die in den Nuten verlaufenden Wicklungabschnitte an den Stirnseiten des Ständerkörpers miteinander verbinden. Die Spulen oder Reihenschaltungen mehrerer Spulen (Spulengruppen) eines Stranges sind i.a. an einem Ende mit einer Stromzuführung verbunden, am anderen Ende sind die Stränge z. B. miteinander am sog. Sternpunkt verbunden. Alternativ können die Stränge auch im Dreieck geschaltet sein.

Häufig umfaßt ein Strang mehrere parallel geschaltete Spulen oder Spulengruppen, die in regelmäßigen Abständen entlang der Umfangsrichtung des Ständers bzw. Läufers in die Nuten eingesetzt sind. Hierbei sind die Spulenenden, die mit der Stromzuführung (z.B. mit den drei Phasen einer Drehstromquelle) verbunden sind, also in der Regel ebenfalls entlang der Umfangsrichtung des Ständers bzw. Läufers verteilt angeordnet. Im allgemeinen schließen sich daher an die Spulenenden längere Leiterabschnitte an, die von den Spulenenden bis zu einem zentralen Anschlußbereich vorgezogen und mit diesem verbunden sind. Es könnten pro Strang auch mehrere Anschlußpunkte vorgesehen sein, wobei auch hierbei das Spulenende über ein längeres Verbindungsstück mit der Stromzuführung verbunden sein würde.

**D1/KOROLY** (US-A-4,309,634) offenbart nur, wie einzelne Spulen einer mehrsträngigen Ständerwicklung aufzubauen sind, nicht jedoch, wie diese Spulen verschaltet sind. Jede Spule hat zwei Spulenseiten ("Coil sides 20a, 20b") sowie Verbindungsleiter ("Connector ring segments 22a, 22b"), welche die Spulenseiten verbinden und hierdurch Spulenwindungen bilden. Bei den Stromschienen des vorliegenden Anspruchs 1 geht es jedoch nicht um derartige Verbindungsleiter, die dem Aufbau einzelner Spulen dienen, sondern vielmehr um solche Leiter, die ganze Spulen oder Spulengruppen miteinander verschalten. D1/KOROLY schweigt jedoch dazu, wie die beschriebenen Einzelspulen miteinander verschaltet sind, und erst recht dazu, welche technischen Mittel für diese Verschaltung verwendet werden. D1/KOROLY offenbart somit keine Stromschienen und keines der kennzeichnenden Merkmale des Patentanspruchs 1.

**D2/MITSUBISHI** (JP 2001 037131 A und zugehöriges Patent Abstract) offenbart eine Wicklung, die aus vorgeformten Wicklungsstäben aufgebaut wird. Wie man den Fig. 4 und 5 entnehmen kann, werden die einzelnen Formteilstäbe offenbar so miteinander verschaltet, daß sich eine durchlaufende Schleifenwicklung ergibt. D2/MITSUBISHI enthält aber keine Offenbarung darüber, ob und wie auf diese Weise gefertigte Spulen miteinander verschaltet werden. Zwei in Fig. 6 gezeigte Ringsegmente stellen offenbar keine Stromringe dar, sondern Montagehilfen, die dem gleichzeitigen Eindrücken mehrerer Formteilstäbe in den Ständer dienen. D2/MITSUBISHI offenbart somit - abgesehen davon, daß es sich um einen Wicklungsaufbau für einen Ständer einer elektrischen Maschine handelt - keines der Merkmale von Anspruch 1.

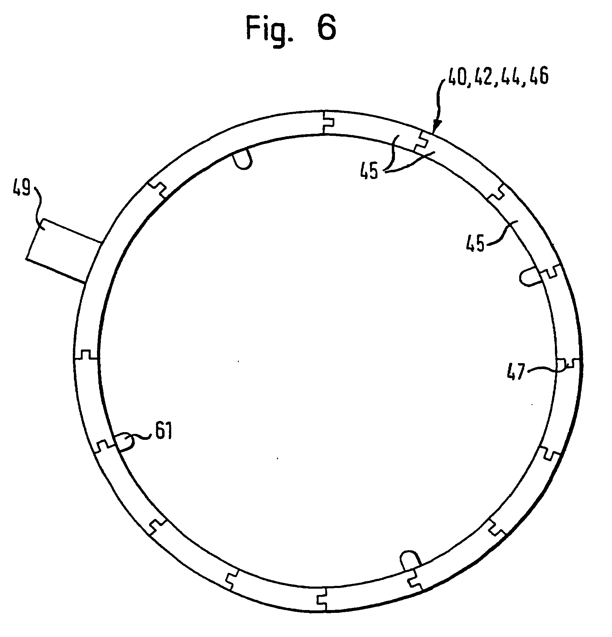

**D3/PALMA** beschreibt einen dreisträngigen Wicklungsaufbau mit in Axialrichtung ausgerichteten Spulen, wobei jeder Strang mehrere Spulen aufweist. Die Spulen jedes Stranges sind - im Gegensatz zum Anspruch 1 der vorliegenden Anmeldung - in Serie geschaltet. Dies ist in Spalte 3, Zeile 22 bis Spalte 4, Zeile 2, nacheinander für jeden der drei Stränge in Verbindung mit Fig. 6A und 6B detailliert beschrieben. Die einzelnen hintereinander geschalteten Spulen jedes Phasenstrangs sind jeweils durch einen Verbindungsstab ("Interconnecting bar 30") miteinander verbunden. Genauer gesagt verbinden die Verbindungsstäbe jeweils das Ende einer Spule mit dem Anfang der in der Serienschaltung nachfolgenden Spule. Die Verbindungsstäbe stellen somit die eigentliche Serienschaltung der Spulen eines Phasenstrangs her. D3/PALMA wird als nächstliegender Stand der Technik angesehen, offenbart jedoch nicht die kennzeichnenden Merkmale des Anspruchs 1, insbesondere keine Parallelschaltung mehrerer Spulen oder Spulengruppen eines Phasenstrangs und auch keine am Ständer umlaufenden Stromschienen, welche jeweils wenigstens ein Ende von parallel geschalteten Spulen oder Spulengruppen mit einem Stromanschluß verbinden.

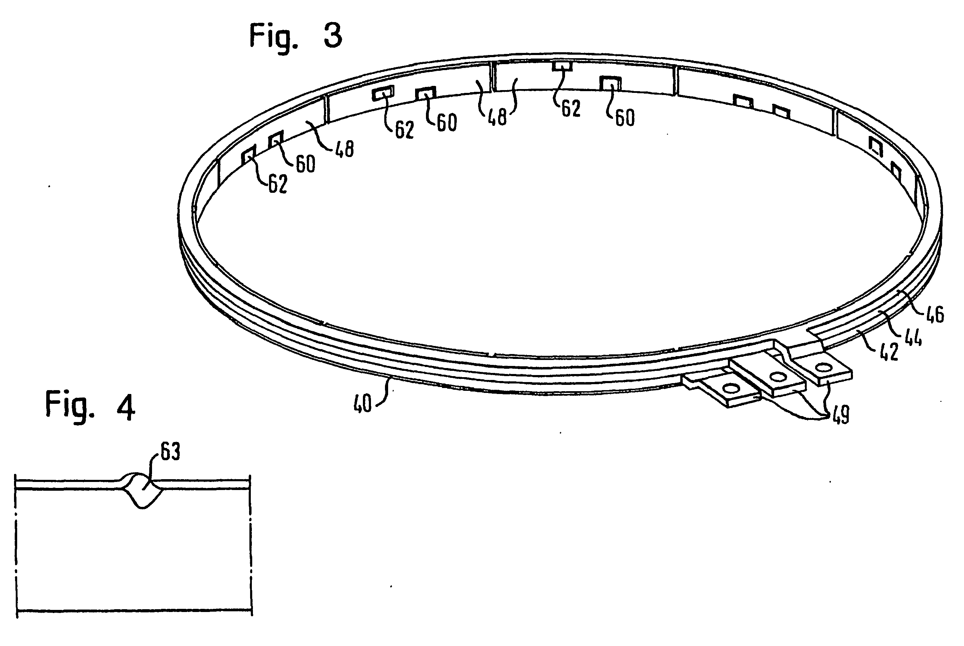

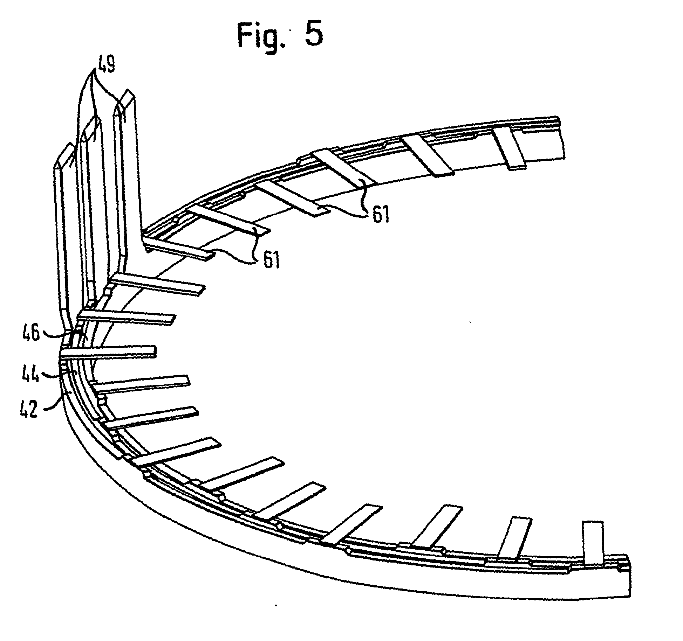

**D4/HILL** (US-A-5,804,902) betrifft eine mehrsträngige Wicklung, bei der jeder einzelne Strang eine den ganzen Ständerumfang umlaufende Schleifenwicklung bildet, wie in Fig. 3 anschaulich zu sehen ist. Zur Zusammensetzen mehrerer derartiger Schleifenwicklungen (wie in Fig. 5 veranschaulicht) ergibt sich ein Gesamt-Wicklungsaufbau gemäß Fig. 4, der scheinbar an den Axial-Stirnseiten Ringe aufweist. Bei diesen Ringen handelt es sich jedoch tatsächlich um die mehrlagig und überlappend zusammengesetzten Verbindungsleiter 13, 14 der einzelnen Phasenstränge. Diese Verbindungsleiter müssen natürlich gegeneinander isoliert sein, sonst würde die Maschine nicht funktionieren. Die vermeintlichen Leiterringe sind also keine Ringe, sondern zusammengesetzte und gegeneinander isolierte Einzelleiter, die nach außen eine ringförmige Gesamt-Kontur zeigen. D4/HILL offenbart also nur einen Wicklungsaufbau für einen Ständer einer elektrischen Maschine mit einer mehrphasigen Wicklung und Spulen, jedoch keines der übrigen Merkmale des Anspruchs 1.

Die Erfindung ist daher auf einen Wicklungsaufbau für eine elektrische Maschine mit einer mehrphasigen Wicklung gerichtet, welche parallelgeschaltete Spulen oder Spulengruppen und umlaufende Stromschienen aufweist. Die parallelgeschalteten Spulen oder Spulengruppen oder einige von diesen sind an die umlaufenden Stromschienen angeschlossen.

Außerdem ist die Erfindung auf ein Verfahren zum Herstellen eines Wicklungsaufbaus einer mehrphasigen Wicklung für eine elektrische Maschine gerichtet, bei dem mehrere parallel geschaltete Spulen oder Spulengruppen der Wicklung an eine umlaufende Stromschiene angeschlossen werden.

Die Enfindung ist in den unabhängigen Ansprüchen definiert. Bevorzugte Ausgestaltungen sind in den abhängigen Ansprüchen definiert.

Die Erfindung wird nun anhand von bevorzugten Ausführungsbeispielen und der beigefügten beispielhaften Zeichnung näher erläutert. In der Zeichnung zeigen:

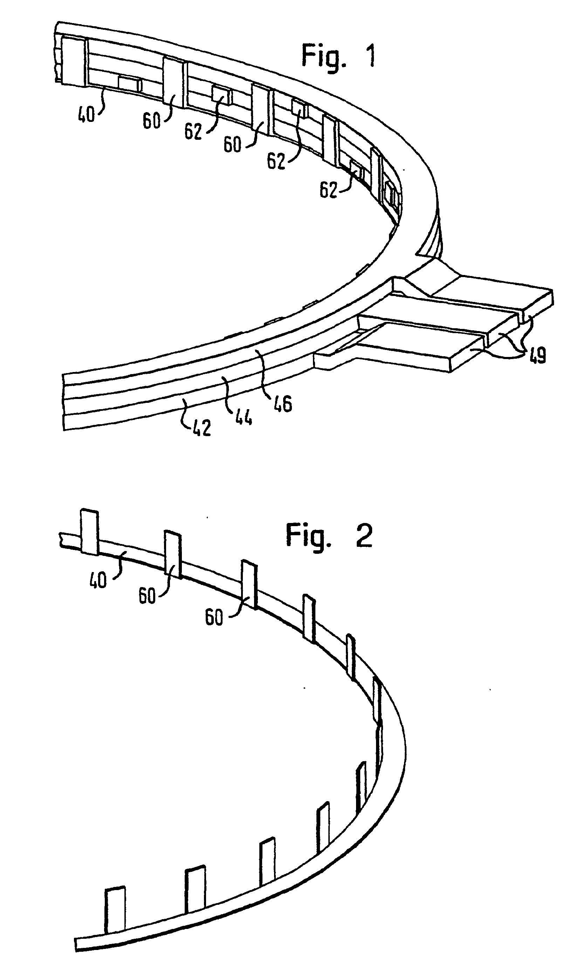

- Fig. 1: eine perspektivische Ansicht einer ersten Ausführungsform eines Stromschienenpakets;
- Fig. 2: eine perspektivische Ansicht der Stromschiene für den Sternpunkt aus Fig. 1;
- Fig. 3: eine perspektivische Ansicht einer weiteren Ausführungsform des erfindungsgemäßen Stromschienenpakets;
- Fig. 4: eine schematische Darstellung einer Verbindungsstelle einer Stromschiene;
- Fig. 5: eine perspektivische Ansicht einer weiteren Ausführungsform eines Stromschienenpakets;
- Fig. 6: eine schematisierte Draufsicht auf eine Stromschiene;

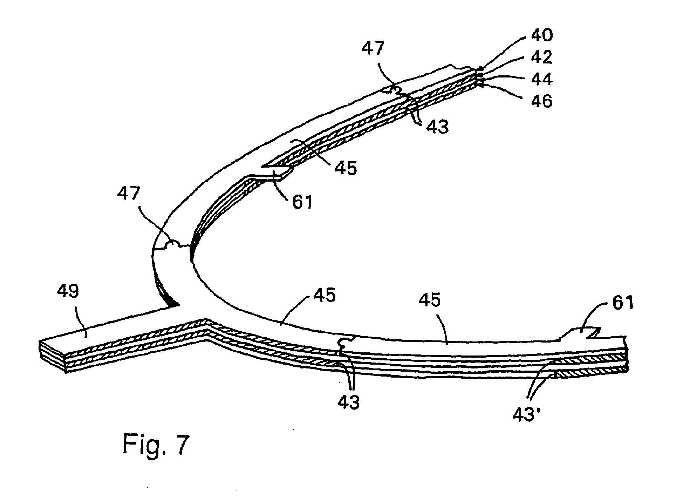

- Fig. 7: eine perspektivische Ansicht einer Ausführungsform des aus einzelnen Ringsektoren zusammengesetzten Stromschienpakets;

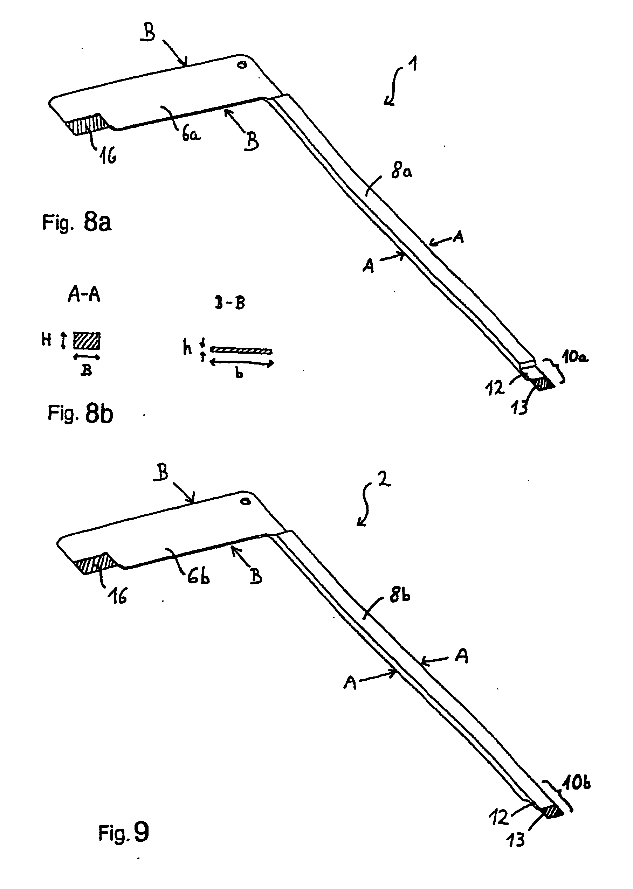

- Fig. 8a: eine perspektivische Ansicht eines ersten Typs eines L-förmigen Formteils;
- Fig. 8b: Schnitte entlang der Linien A-A und B-B in Fig. 1;
- Fig. 9: eine perspektivische Ansicht eines zweiten Typs eines L-förmigen Formteils;

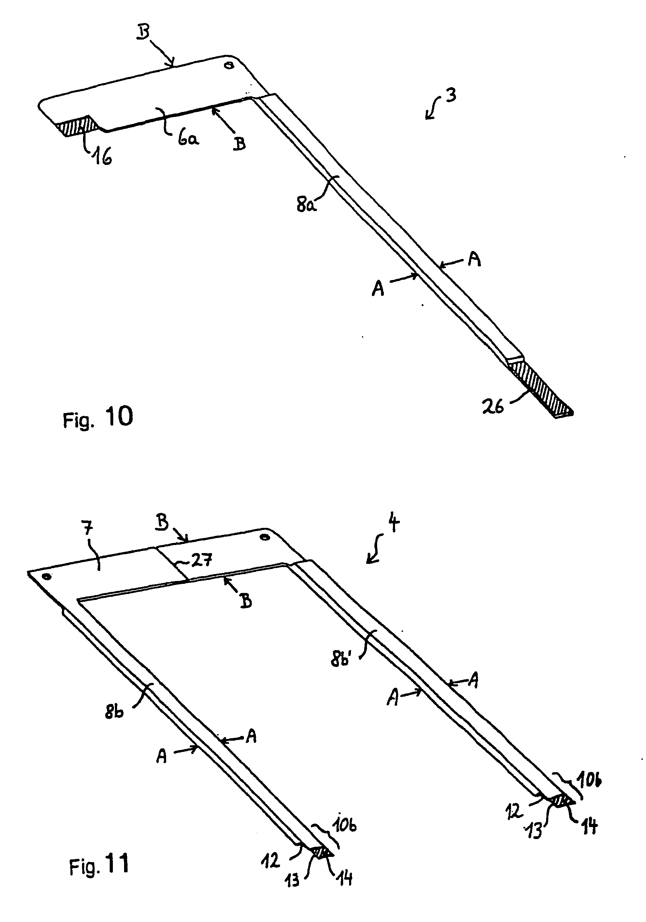

- Fig. 10: eine perspektivische Ansicht eines weiteren Typs eines L-förmigen Formteils;
- Fig. 11: eine perspektivische Ansicht eines noch weiteren, U-förmigen Formteil-Typs;

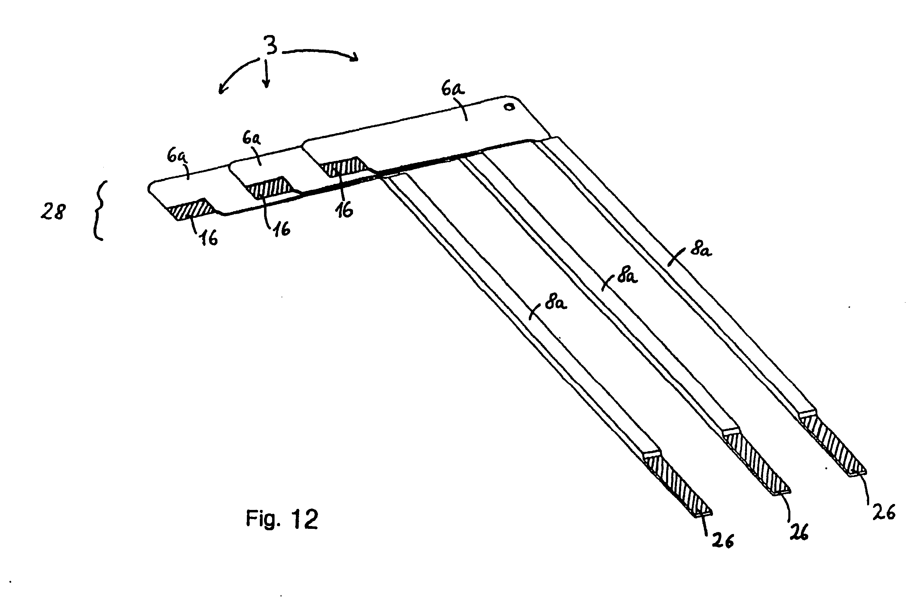

- Fig. 12: eine perspektivische Ansicht einer Anordnung mehrerer L-förmiger Formteile;

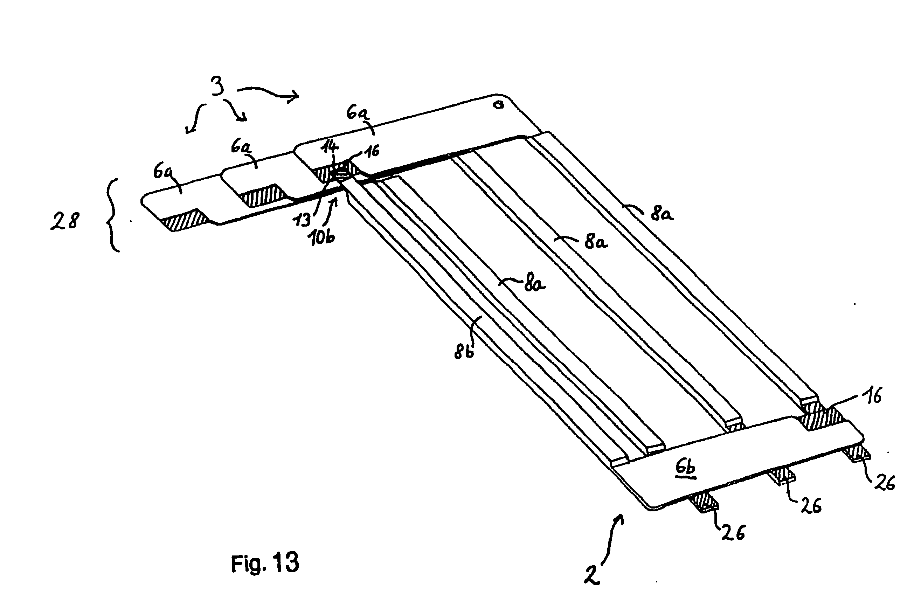

- Fig. 13: die Ansicht der Fig. 12, mit einem weiteren L-förmigen Formteil;

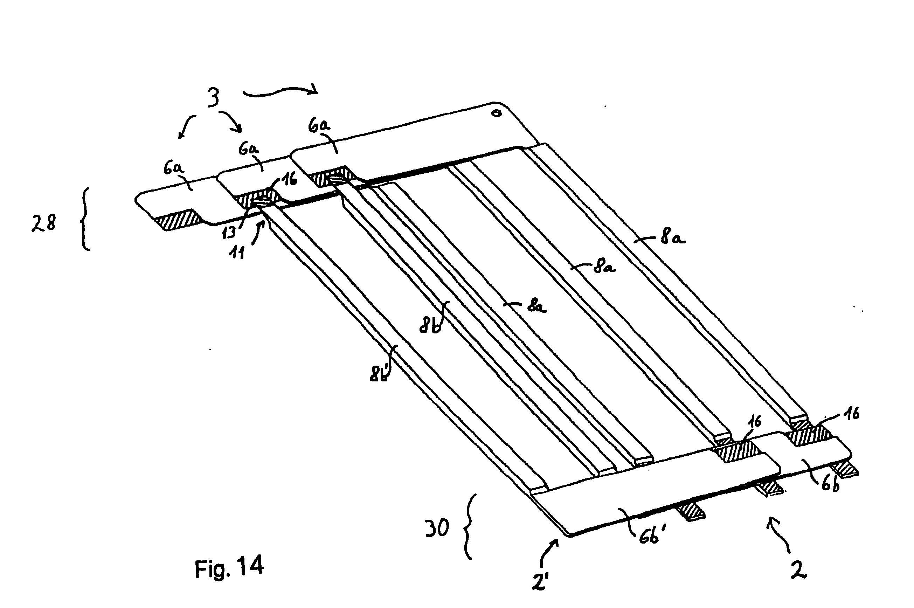

- Fig. 14: die Ansicht der Fig. 13, mit einem noch weiteren L-förmigen Formteil;

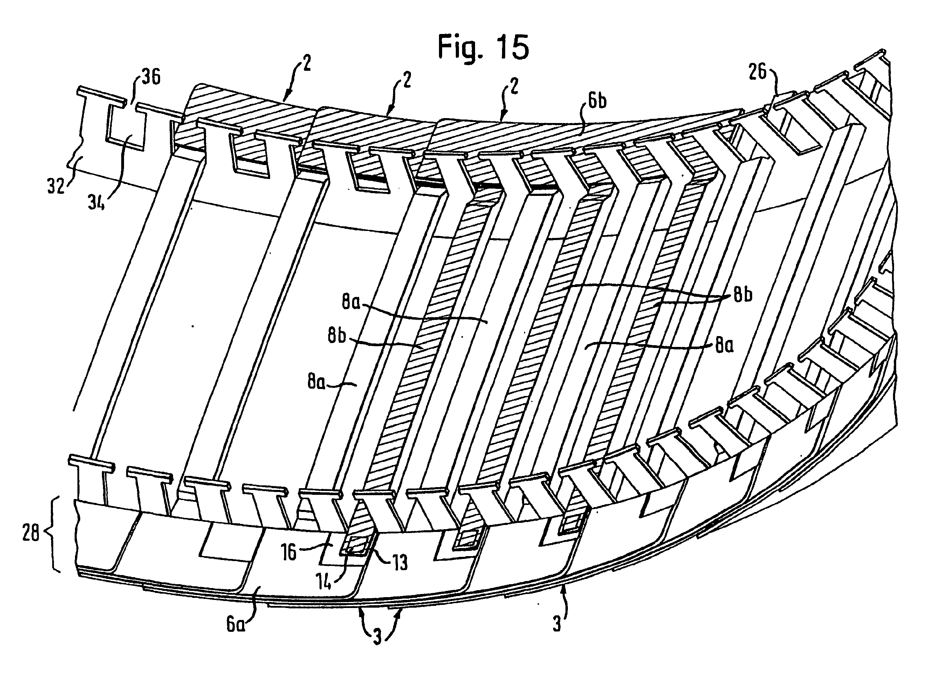

- Fig. 15: eine perspektivische Ansicht eines Ständer- oder Läuferausschnitts einer elektrischen Maschine mit Nuten, in die L-förmige Formteile eingesetzt sind;

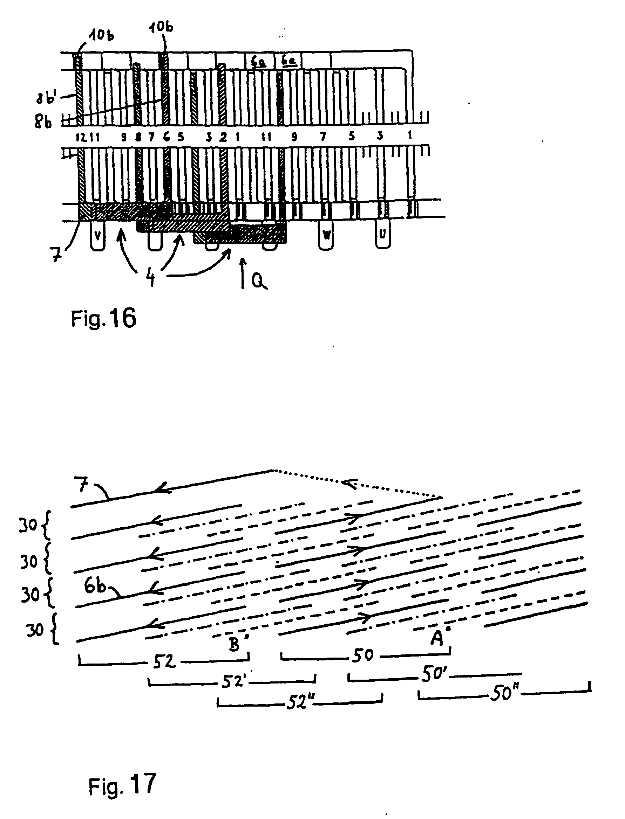

- Fig. 16: eine schematische Draufsicht auf die Nuten eines Ständer- oder Läuferkörpers mit eingesetzten U-Formteilen;
- Fig. 17: eine schematische Ansicht der Stirnseite eines bewickelten Ständerkörpers;

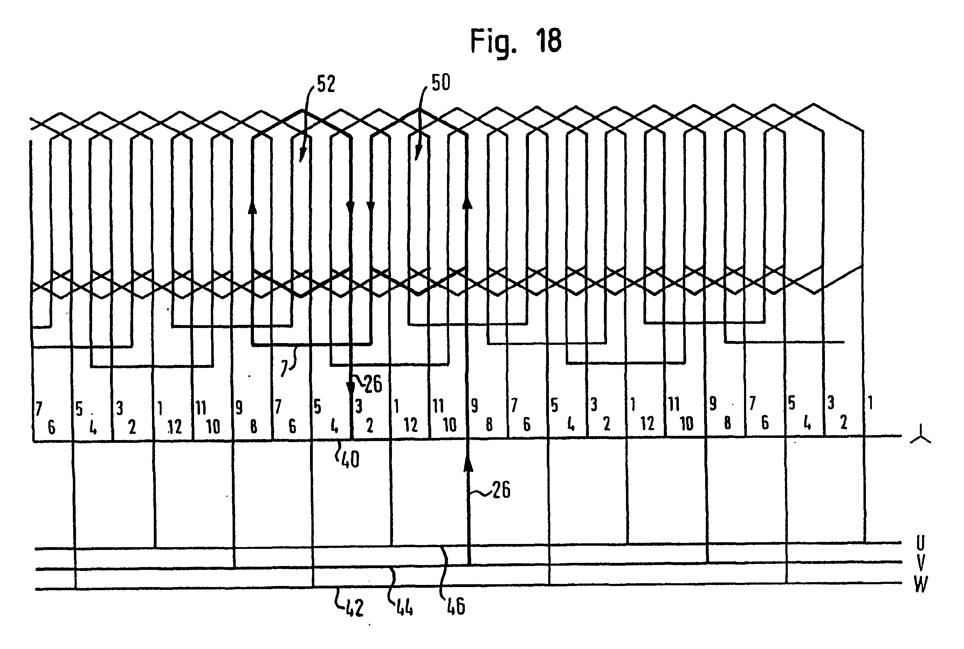

- Fig. 18: ein Wickelschema einer Dreiphasenwicklung gemäß einem ersten Ausführungsbeispiel;

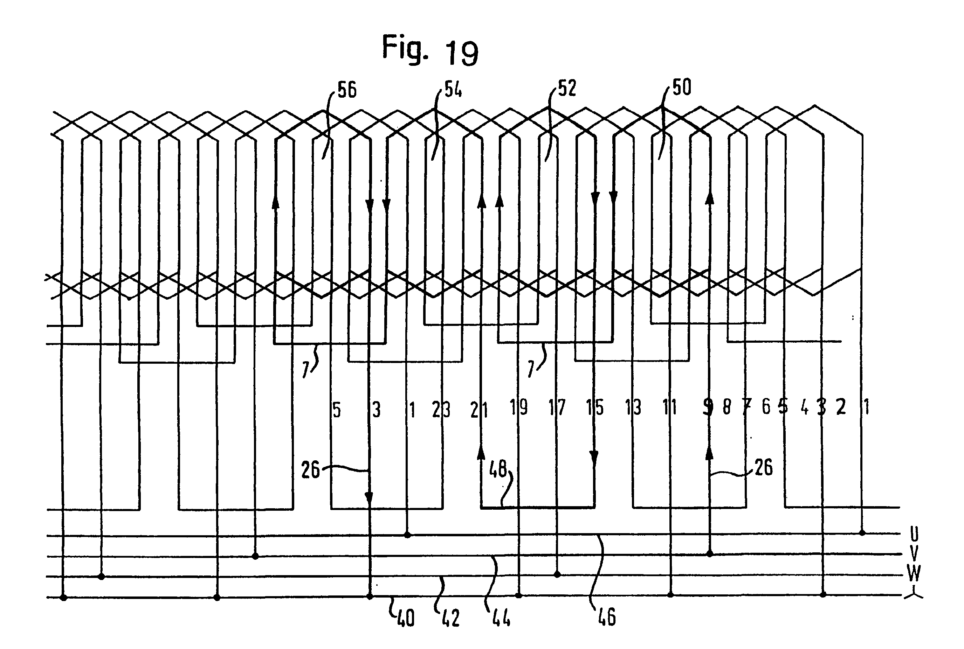

- Fig. 19: ein Wickelschema einer Dreiphasenwicklung gemäß einem zweiten Ausführungsbeispiel;

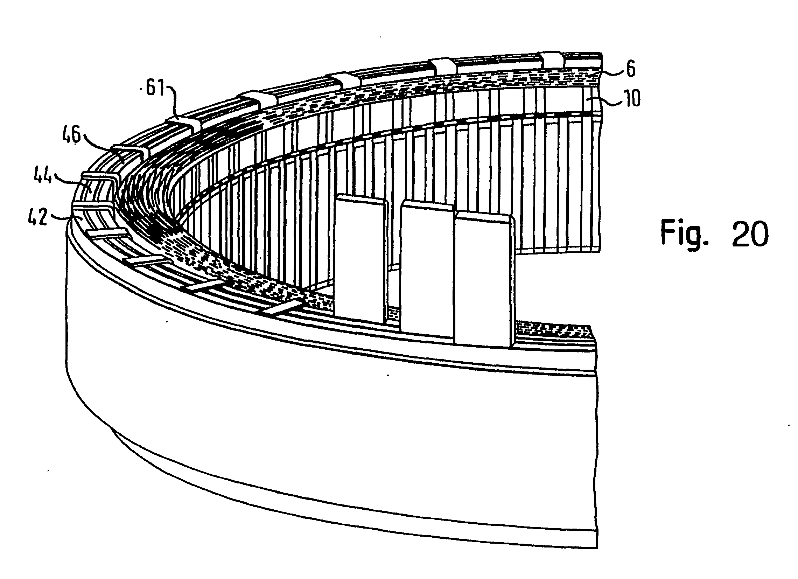

- Fig. 20: eine perspektivische Ansicht eines Abschnitts eines vollständig mit Wicklung und Stromschienenpaket bestückten Ständers.

In den Figuren sind funktionsgleiche oder -ähnliche Teile zum Teil mit gleichen Bezugszeichen gekennzeichnet.

Zur Vereinfachung erfolgt die folgende Erläuterung der bevorzugten Ausführungsformen anhand des Aufbaus von Ständerwicklungen; gleichermaßen gilt das Gesagte aber auch für entsprechende Läuferwicklungen. Hierbei dienen die Stromschienen ggf. auch als Schleifringe. Beispielsweise zeigen die Fig. 15 und 16 gleichermaßen Ansichten eines Ständers (bei Fig. 15 einer Innenläufermaschine) wie auch eines Läufers (bei Fig. 16 einer Außenläufermaschine).

Fig. 1 zeigt eine erste Ausführungsform eines Stromschienenpakets. Bevor diese Figur näher erläutert wird, folgen zunächst einige Anmerkungen zu den bevorzugten Ausführungsformen.

Die gezeigten Ausführungsformen beziehen sich auf den Aufbau von Wicklungen für einen Ständer einer Radialfeldmaschine in Innenläuferbauart. Im folgenden wird daher die Nutlängsrichtung als Axialrichtung und die Richtung der Nuttiefe als Radialrichtung bezeichnet. Die beschriebenen Wicklungen und Stromschienen sind aber gleichermaßen auch für Außenläufermaschienen geeignet. Auch eine Axialfeldmaschine kann mit entsprechenden Stromschienen bestückt werden. Entsprechendes gilt für Linearmaschinen, wobei bei letzteren die Stromschienen entlang dem (ebenen) Ständer verlaufen.

Der in den Figuren gezeigte Ständer umfaßt zur Führung des magnetischen Flusses einen Ständerkörper in Form eines Blechpakets, das zur Aufnahme der Nutstäbe der Wicklung genutet ist. Der nicht genutete Teil bildet den sog. Rücken. Unter "Stirnseiten" werden jeweils die Seiten des Ständerkörpers verstanden, an welchen die Nuten quer angeschnitten sind. Bei den gezeigten Radialfeldmaschinen sind dies die axialen Stirnflächen des Ständerkörpers.

Bei den beschriebenen Ausführungsformen des Aufbaus und des Verfahrens zum Herstellen eines Wicklungsaufbaus einer Mehrphasenwicklung werden zum Anschließen der Wicklung an eine Stromquelle umlaufende Stromschienen verwendet, an denen mehrere parallel geschaltete Spulen oder Spulengruppen angeschlossen sind. Diese sind vorteilhaft in regelmäßigen, durch das Wickelschema vorgegebenen, Abständen entlang des Umfangs der Stromschiene angeschlossen. Die Spulenenden werden also nicht über Verbindungsstücke mit zentralen Anschlußpunkten verbunden, sondern können unter Umständen direkt mit den Stromschienen verbunden, z. B. verschweißt, werden. Die Verwendung von umlaufenden Stromschienen ist auch deshalb vorteilhaft, weil jeweils zwei verschiedene Stromwege zwischen Stromquelle und Spulenende vorhanden sind. Sollte die elektrische Verbindung an einer Stelle einer Stromschiene unterbrochen sein, werden dennoch alle Spulen bzw. Spulengruppen mit Strom versorgt, nämlich über den zweiten, redundanten Stromweg.

Bei den beschriebenen Mehrphasenwicklungen wird in der Regel eine der Anzahl der Phasen entsprechende Anzahl von Stromschienen für die Stromzuführung und - bei einer Sternschaltung - eine Stromschiene für den Sternpunkt, den Verbindungspunkt der Phasenstränge der Wicklung, verwendet. Bei einer Dreieckschaltung der Stränge entfällt die Stromschiene für den Sternpunkt.

Gemäß einer bevorzugten Ausgestaltung weist die elektrische Maschine einen Ständer mit Nuten auf, wobei die Stromschienen an einer oder beiden Stirnseiten des Ständers in Richtung der Nuttiefe unterhalb der Nutöffnungen angeordnet sind. In anderen Worten liegen die Stromschienen an der stirnseitigen Fläche des Ständerrükkens, welcher der Rückführung des magnetischen Flusses dient. Bei den bevorzugten Ausführungsformen der Wicklung sind die Wickelköpfe nämlich derart raumsparend angeordnet, daß sie an die Stirnseiten in Radialrichtung nicht mehr Platz in Anspruch nehmen, als durch die Nuttiefe gegeben ist. Der Platz am Ständerrücken steht also zum Verschalten der Wicklung zur Verfügung. Durch Anordnen der Stromschienen an dieser Stelle kann der Raum zumindest an einer Stirnfläche des Ständerkörpers völlig ausgefüllt und so die Ausdehnung des magnetisch nicht aktiven Raums des Ständers in Axialrichtung minimiert werden. Zudem sind die Stromschienen in unmittelbarer Nähe der Spulenenden angeordnet.

Die Stromschienen können sämtlich auf einer Stirnseite untergebracht werden. Bei anderen Ausführungsformen ist hingegen auf jeder Stirnseite zumindest eine Stromschiene angeordnet. Beispielsweise sind auf beiden Stirnseiten jeweils für jede Phase eine Stromschiene angeordnet. Zur Vereinfachung der Montage werden die auf der gleichen Stirnseite angeordneten Stromschienen bevorzugt zu einem einzigen Bauteil zusammengefaßt. Gemäß einer weiteren Ausgestaltung sind daher mehrere Stromschienen nebeneinander angeordnet und zu einem Stromschienenpaket verbunden. Beispielsweise sind die Stromschienen hierbei als flache Ringe ausgebildet, welche übereinandergesetzt und durch einen isolierenden Kleber zusammengeklebt werden.

Bevorzugt ist zumindest eine Stromschiene aus einzelnen Ringsektoren hergestellt. Wird eine Stromschiene nämlich als Ganzes hergestellt, zum Beispiel aus einer Platte ausgestanzt, kann ein großer Teil des Materials nicht für weitere Stromschienen verwendet werden. Einzelne Ringsektoren können hingegen mit sehr wenig Verschnitt hergestellt werden. Alternativ kann eine Stromschiene auch durch Biegen aus einem Stab mit geeignetem Querschnitt hergestellt werden.

Gemäß einem weiteren bevorzugten Ausgestaltung ist die Wicklung aus Formteilen zusammengesetzt. Mit Formteilwicklungen werden einerseits hohe Nut-Füllfaktoren erreicht. Andererseits können durch geeignete Formgebung und Anordnung der Formteile kompakte Wickelköpfe erzielt werden. Es sind beispielsweise Wikkelkopfanordnungen möglich, bei denen die Fläche am Ständerrücken freibleibt und mit den Stromschienen ausgefüllt werden kann.

Bevorzugt sind die Stromschienen direkt mit Formteilen der Wicklung verbunden. Dies ist insbesondere dann möglich, wenn die Stromschienen am Ständerrücken unterhalb der Nuten und somit direkt neben den Wickelköpfen angeordnet sind. Vorteilhaft sind die Stromschienen und/oder die die Spulenenden bildenden Formteile zu diesem Zweck mit entsprechenden Verbindungsstellen, z.B. in Form von Laschen, ausgestattet, welche aufeinandergesetzt und miteinander verbunden, z.B. verschweißt, werden können.

Bei den beschriebenen Ausführungsformen sind die mit den Stromschienen verbundenen Enden der Spulen oder Spulengruppen sämtlich auf der - in Richtung der Nuttiefe - gleichen Seite der Nutöffnungen angeordnet wie die Stromschienen. Dies wird beispielsweise dadurch erreicht, daß jeweils zwei wendelförmige Spulen in Reihe geschaltet sind. Zu einem bestimmten Zeitpunkt durchfließt der Strom dann eine der Spulen in Richtung Nutkopf und die andere Spule in Richtung Nutboden. Die Anschlüsse zu den Stromschienen liegen demnach entweder beide am Nutkopf oder am Nutboden. Liegen auf dieser Seite auch die Stromschienen, können die Spulenenden direkt an diese angeschlossen werden. Bei (nicht in Reihe geschalteten) Einzelspulen müßte hingegen ein Anschlußstück quer über die Wickelköpfe vom Nutkopf zum Nutboden geführt werden, welches Platzbedarf in Axialrichtung hätte.

Bei einigen der beschriebenen Ausführungsformen sind mehrere oder alle Stromschienen in der Längsrichtung der Nuten nebeneinander geschichtet. Dies ist insbesondere dann vorteilhaft, wenn die Stromschienen an der Stirnseite des Ständers unterhalb der Nuten angeordnet sind, da sie dann direkt an die Wickelköpfe angrenzen und dadurch auf kurzem Wege mit der Wicklung verbunden werden können. Hierfür können zum Beispiel spezielle Formteile verwendet werden, die an ihrem Nutstabende eine verlängerte Lasche aufweisen, die bis zu den Stromschienen reicht. Unter "Nutstäben" versteht man diejenigen Wicklungsabschnitte, die in den Nuten verlaufen und die Spulenseiten bilden, unter "Verbindungsleitern" diejenigen Abschnitte, die an den Stirnseiten des Ständers verlaufen und die Wickelköpfe bilden.

Bei einer derartigen Kontaktierung der Spulenenden mit geschichteten Stromschienen muß gewährleistet sein, daß jedes Spulenende nur eine der Stromschienen kontaktiert. Vorteilhaft weist daher mindestens eine Stromschiene an der den Nutöffnungen - also den Wickelköpfen - zugewandten Seite Erhöhungen auf, mit denen Spulenenden verbunden sind. Wird eine Spule also beispielsweise durch eine Lasche am Ende eines Nutstabs mit einer solchen Erhöhung kontaktiert und verschweißt, wird die Lasche somit gleichzeitig auf Abstand von den anderen Stromschienen gehalten.

Alternativ sind die Stromschienen bei anderen beschriebenen Ausführungsformen in Richtung der Nuttiefe, also in Radialrichtung, übereinander geschichtet. Bei beiden Alternativen - axiale oder radiale Schichtung der Stromschienen - weist bevorzugt mindestens eine Stromschiene Laschen auf, die sich über die anderen Stromschienen erstrecken und mit denen Spulenenden verbunden sind. Diese Laschen können gegebenenfalls entsprechende Laschen an den Spulenenden ersetzen, so daß bei einer Formteilwicklung keine Spezialformteile zum Verschalten der Wicklung benötigt werden. Bei Ausführungsformen, in denen die Stromschienen radial geschichtet sind, führen die Laschen in Radialrichtung an den anderen Stromschienen vorbei bis zu den Wickelköpfen, wo sie gegebenenfalls abgeknickt und mit Spulenenden verbunden werden. Bei solchen Ausführungsformen, bei denen die Stromschienen axial geschichtet sind, weisen die Laschen beispielsweise in Axialrichtung über die anderen Stromschienen und bilden dadurch einen vergrößerten Verbindungsbereich, auf den die Spulenenden aufgesetzt und verbunden, z.B. verschweißt, werden.

Gemäß einer bevorzugten Ausgestaltung sind zumindest zwei Spulen der Wicklung in Reihe geschaltet, wobei zumindest einige Verbindungsstücke zwischen in Reihe geschalteten Spulen eine weitere Stromschiene aus mehreren voneinander isolierten Sektoren bilden. Diese Stromschiene ist beispielsweise radial zwischen den Wickelköpfen und den übrigen Stromschienen angeordnet. Bevorzugt wird sie insbesondere bei solchen Ausführungsformen eingesetzt, bei denen jeweils vier Spulen in Reihe geschaltet sind und ein Spulenpaar jeweils durch ein Verbindungsstück in Reihe geschaltet ist, welches auf der den Stromschienen abgewandten Seite der Wickelköpfe über die Verbindungsleiter geschichtet ist. Die Verbindungsstücke zwischen zwei Paaren von in Reihe geschalteten Spulen können dann so angeordnet werden, daß an jeder Stelle des Ständerumfangs höchstens ein Verbindungsstück parallel geführt wird. Somit können die Verbindungsstücke zu einem eigenen Ring aus voneinander isolierten Sektoren zusammengefaßt werden. Dieser Ring wird bevorzugt in das Stromschienenpaket integriert.

Gemäß einer noch weiteren Ausgestaltung weist die Wicklung mehrere überlappende Spulen auf, die aus in den Nuten liegende Nutstäben und aus an den Stirnseiten des Ständers liegenden Verbindungsleitern aufgebaut sind, wobei die Verbindungsleiter flacher als die Nutstäbe ausgebildet sind und die Verbindungsleiter von überlappenden Spulen verschränkt und somit in Lagen angeordnet sind.

Im folgenden wird die in den Ausführungsbeispielen gezeigten Wicklung näher erläutert. Die beschriebenen Stromschienen können aber selbstverständlich zum Anschließen von beliebigen anderen Mehrphasenwicklungen verwendet werden.

Bevorzugt ist die Wicklung zumindest teilweise aus L-förmigen Formteilen (L-Formteilen) aufgebaut, wobei jeweils ein Schenkel des L-Formteils einen Nutstab und der andere Schenkel einen senkrecht dazu, im wesentlichen in Sehnenrichtung verlaufenden Verbindungsleiter bildet. Durch Verbinden des freien Endes des Nutstabs eines Formteils mit dem freien Ende des Verbindungsleiters eines andere Formteils entsteht eine zusammenhängende Wicklung, bei den bevorzugten Ausführungsformen eine aus wendelartigen Spulen aufgebaute Wicklung. Hierbei bilden zwei miteinander verbundene L-Formteile jeweils eine Windung einer Spule.

Nach einer weiteren Ausgestaltung läßt sich die gesamte Wicklung aus nur wenigen verschiedenen Formteiltypen aufbauen. Gemäß einer Ausführungsform werden für den Aufbau der Wicklung - eventuell abgesehen von der Verschaltung der Spulen - nur zwei verschiedene Typen von L-Formteilen benötigt, deren Verbindungsleiterschenkel flacher als die Nutstabschenkel ausgebildet sind. Ein erster Typ ist dazu ausgebildet, eine Verbindung in ein und derselben Wicklungslage zu bilden, während ein zweiter Typ dazu ausgebildet ist, eine Überführung von einer Wicklungslage in die nächste zu bilden. In einer bevorzugten Ausführungsform ist am Ende jedes Nutstabschenkels eine abgeflachte Lasche angeordnet, wobei bei dem einen Typ von L-förmigen Formteil die abgeflachte Lasche und der flachere Schenkel beide auf der Höhe der Unterseite des Nutstabschenkels liegen, während bei dem anderen Typ von L-förmigen Formteil die abgeflachte Lasche auf der Höhe der Oberseite des Nutstabschenkels liegt und der flachere Schenkel auf der Höhe der Unterseite des Nutstabschenkels. Ein Formteil von Typ 1 stellt eine Hälfte einer Spulenwindung dar. Durch ein Formteil vom Typ 2 wird die Windung vervollständigt und durch den Verbindungsleiter dieses Formteils wird dies Spule in die nächste Wicklungslage überführt. Indem abwechselnd Formteile vom Typ 1 mit Formteilen vom Typ 2 verbunden werden, entsteht eine wendelartige Spule.

Zum Verschalten der so erhaltenen Wicklung werden ggf. weitere Formteiltypen verwendet. Beispielsweise ist ggf. ein weiterer Formteiltyp zur Verbindung von zwei hintereinandergeschalteten Spulen vorgesehen. Bevorzugt ist dieses Formteil U-förmig ausgebildet und wird von zwei Nutstabschenkeln und einem Verbindungsleiterabschnitt gebildet, der flacher als die Nutstabschenkel ausgebildet ist. Zum Anschließen einer Spule an eine Stromzuführung wird ggf. ein weiterer Formteiltyp verwendet. In einigen Ausführungsformen handelt es sich hierbei um einen weiteren Typ eines L-förmigen Formteils, dessen Verbindungsleiterschenkel flacher als der Nutstabschenkel ausgebildet ist, wobei am Ende des Nutstabschenkels eine verlängerte abgeflachte Lasche zum Verbinden mit einer Stromschiene angeordnet ist. In anderen Ausführungsformen sind derartige Laschen an den Stromschienen selbst angeordnet, so daß zum Anschließen der Wicklung ein Standardformteil vom Typ 1 oder 2 verwendet werden kann.

Nach einer weiteren Ausgestaltung sind die Verbindungsleiter von überlappenden Spulen mit wenigstens einer vollständigen Windung ineinander verschränkt angeordnet. Hierbei sind die Verbindungsleiter in Lagen angeordnet und vorzugsweise flacher als die Nutstäbe ausgebildet, beispielsweise so flach, daß die zu einer Wicklungslage gehörende Lage von Verbindungsleitern der verschiedenen überlappenden Spulen nicht dicker als ein Nutstab ist. Werden mehrere derartige Lagen von ineinander verschränkten Verbindungsleitern übereinander gesetzt, so können Spulen mit beliebiger Windungszahl aufgebaut werden.

In den dargestellten Beispielen ist eine Wicklung mit ineinander verschränkten Verbindungsleitern aus L-förmigen Formteilen aufgebaut. In anderen (nicht gezeigten) Ausführungsformen ist eine solche Wicklung z.B. aus einzelnen Nutstäben und Verbindungsleitern (I-Formteilen), aus C- oder U-förmigen Formteilen oder aus Formteilen aufgebaut, die zur Zeit des Einsetzens bereits eine vollständige Windung umfassen (0-Formteile).

Um die Wicklung an den Stirnseiten möglichst raumsparend zu gestalten, wurde es als vorteilhaft erkannt, die Wicklung nach einem Wickelschema auszuführen, bei dem an den Stirnseiten jeweils möglichst wenige Wickelköpfe überlappend aneinander vorbei geführt werden. Als einfaches Beispiel sei eine Drehstromwicklung mit einer Nut pro Pol und Strang (Einlochwicklung) genannt: Hier verlaufen an den Stirnseiten jeweils nur zwei Wickelköpfe überlappend. Anders liegen die Verhältnisse z.B. bei Wicklungen mit mehreren Nuten pro Pol und Strang (Mehrlochwicklungen), welche verwendet werden, um gegenüber Einlochwicklungen einen günstigeren Feldverlauf zu erzielen, der besser an eine Sinusform angeglichen ist. Bei einer Drehstrom-Zweilochwicklung verlaufen z.B. jeweils 4 Wickelköpfe an den Stirnseiten überlappend.

Um die Anzahl der jeweils aneinander vorbeilaufenden Wickelköpfe bei Mehrlochwicklungen zu reduzieren, ist die Wicklung bei den beschriebenen Ausführungsformen daher gesehnt ausgeführt. Bei einer gesehnten Wicklung ist die Spulenweite kleiner als die Polteilung. Unter Polteilung versteht man den in Nuten ausgedrückte Abstand zwischen zwei magnetischen Polen. Die Spulenweite gibt an, um wie viele Nuten von der ersten Spulenseite entfernt die zweite Spulenseite eingelegt wird. In den bevorzugten Ausführungsformen ist die Polteilung 6, die Spulenweite aber nur 5. Das bedeutet, daß die Wickelköpfe der Spulen gegenüber einer ungesehnten Wicklung verkürzt sind, da sie nur 4 anstatt 5 Nuten überbrücken müssen. Insgesamt sind die an den Stirnseiten verlaufenden Abschnitte der Wicklung daher kürzer, und damit wird weniger Platz beansprucht und die ohmschen Verluste der Wicklung reduziert. Bei der gezeigten Drehstrom-Zweilochwicklung wird durch die Sehnung der Wicklung z.B. erreicht, daß an den Stirnseiten nur jeweils drei statt vier Wickelköpfe überlappend geführt werden. Die Wahl eines derartigen gesehnten Wickelschemas ist besonders für Formteilwicklungen vorteilhaft im Sinne der Erzielung eines kompakten Wickelkopfbereichs, ist aber bei Wicklungen aus Drahtgebilden mit entsprechenden Vorteilen anwendbar.

Die in den Ausführungsbeispielen gezeigten Wicklungen weisen mehrere wendelartige Spulen auf, wobei jeweils zwei Spulen derart in Reihe geschaltet sind, daß der Strom in einer der Spulen durch die Wendel in Richtung Nutkopf fließt, und in der anderen in Richtung Nutboden. Bei den Spulen sind die Verbindungsleiter flacher als die Nutstäbe ausgebildet und an den Stirnseiten schräg zur Verbindungslinie zwischen den beiden Nuten übereinander geschichtet, deren Nutstäbe sie verbinden. Eine wendelförmige Spule wird dann z.B dadurch gebildet, daß die auf einer Stirnseite gelegenen Verbindungsleiter Nutstäbe der gleichen Lage verbinden und die auf der anderen Stirnseite gelegenen Verbindungsleiter Nutstäbe aus radial übereinanderliegenden Lagen. Eine solche Wicklung kann z.B. aus L-Formteilen hergestellt werden. Es können aber grundsätzlich auch andere Formteile (z.B. U-, C-, I-, oder 0-förmige) oder Drahtspulen verwendet werden.

Durch die gezeigte Hintereinanderschaltung zweier wendelartiger Spulen wird erreicht, daß die Anschlüsse an die Stromschienen entweder am Nutboden oder am Nutkopf angeordnet sind, also beide auf der gleichen Seite der Verbindungsleiter. Dies ist insbesondere dann von Vorteil, wenn auch das Stromschienenpaket auf dieser Seite der Verbindungsleiter angeordnet ist.

Insgesamt wird bei den beschriebenen Ausführungsformen der Platz an den Stirnflächen eines Ständerkörpers raumsparend ausgenutzt, wodurch insbesondere eine geringe axiale Ausdehnung des magnetisch nicht aktiven Volumens des Ständers erreicht wird. Die bevorzugte Formteilwicklung hat zudem einen hohen Füllfaktor, so daß eine hohe Drehmomentdichte erzielt wird. Die bevorzugten Ausführungsformen eignen sich daher insbesondere zur Verwendung bei einem Kurbelwellen-Starter-Generator für ein Kraftfahrzeug. Hierbei handelt es sich um eine als Starter- und Generator fungierende elektrische Maschine, die konzentrisch auf der Kurbelwelle eines Verbrennungsmotors sitzt und vorzugsweise ohne Zwischenübersetzung drehfest mit dieser Welle verbunden ist. Aufgrund des begrenzten Einbauraums ist die axiale Ausdehnungsmöglichkeit eines Starter-Generators gering, andererseits sind für den Direktstart hohe Drehmomente erforderlich.

Nun zurückkommend auf die Figuren 1-7, sind dort verschiedene Ausführungsformen der Stromschienen gezeigt. Die Stromschienen umlaufen den Ständer, so daß entlang der Umfangsrichtung mehrere parallelgeschaltete Spulen oder Spulengruppen an sie angeschlossen werden können. Da durch die der Stromzufuhr dienenden Stromschienen in der Regel ein hoher Strom fließt, weisen die Stromschienen zur Minimierung der ohmschen Verluste einen relativ großen Querschitt auf und nehmen daher viel Raum in Anspruch. Um die axiale Ausdehnung des Ständers möglichst klein zu halten, sind die Stromschienen in den gezeigten Beispielen in dem Bereich radial unterhalb der Nutöffnungen an einer Stirnseite eines Ständerkörpers angeordnet. Bei der vorstehend beschriebenen kompakten Wickelkopfanordnung bleibt diese Fläche an den Stirnseiten nämlich ohnehin frei und kann daher platzsparend für die Stromzufuhr genützt werden. Die gezeigten Stromschienenpakete sind daher insbesondere zum Anschließen der vorstehend beschriebenen Wicklung geeignet, können aber prinzipiell mit jeder beliebigen Wicklung kombiniert werden.

Eine beispielhafte Anordnung der Stromschienen für eine Drehstromwicklung gemäß einer ersten Ausführungsform ist in Fig. 1 gezeigt. Die Stromschienen sind hier, wie gesagt, in Richtung der Nuttiefe unterhalb der Wickelköpfe angeordnet und über Anschlüsse 49 mit der Drehstromquelle verbunden. Die in Fig. 1 dargestellten Stromschienen sind in der Längsrichtung der Nuten, also in Axialrichtung, übereinandergeschichtet, so daß jede einzelne Stromschiene direkt an die radial innen liegenden Wickelköpfe anliegt. Die Verbindungsstellen 60, 62 zum Anschließen der Stränge an die Stromschienen sind daher auf der radialen Innenseite der Stromschienen angeordnet. Die Wicklung kann daher direkt und ohne weitere Verbindungsstücke mit den Stromschienen 40, 42, 44, 46 verbunden, z.B. verschweißt oder verlötet werden, z.B. wenn die Wicklung teilweise aus speziellen Formteilen 3 mit verlängerten Laschen 26 am Nutstabende aufgebaut ist, die bis zu den Verbindungsstellen 60, 62 reichen (siehe Fig. 10).

Hierbei muß jedoch gewährleistet sein, daß jede verlängerte Lasche 26 nur eine der Stromschienen 40, 42, 44 oder 46 kontaktiert. Zu diesem Zweck sind die Stromschienen 42, 44, 46 mit einer elektrisch isolierenden Beschichtung versehen, welche an den Verbindungsstellen 62 Fenster aufweist, die derart zueinander versetzt sind, daß jede Lasche 26 maximal ein Fenster kontaktiert. Gemäß einer anderen, in Fg. 1, 3 und 4 gezeigten Variante weisen die Stromringe an den Kontaktstellen 62 Erhöhungen, sog. Schweißbuckel 63 auf, welche radial nach innen ausragen. Wird eine verlängerte Lasche 26 mit einem Schweißbuckel 63 kontaktiert und verschweißt, wird sie somit gleichzeitig auf Abstand von den anderen Stromschienen gehalten. Der Schweißbuckel 63 wird z.B. in die Stromschienen 42, 44, 46 eingeprägt, indem die Stromschienen 42, 44, 46 an den Stellen, wo ein Schweißbuckel 63 entstehen sollen, in Axialrichtung gepreßt werden, so daß sich ein Buckel 63 aus verdrängtem Material auf der radial innen liegenden Seite der Stromschiene bildet. Das herausgedrängte Material kann z.B. die Form einer vorstehenden Fahne haben (siehe Fig. 4).

Die Wicklung ist aber ggf. nicht nur mit den Stromschienen für die Stromzufuhr verbunden, sondern auch mit einer Stromschiene für die Verbindung der drei Stränge, dem sog. Sternpunkt. Alternativ können die Stränge auch im Dreieck geschaltet sein, so daß keine Stromschiene für den Sternpunkt benötigt wird. Da die Ströme in den drei Phasen einer Drehstromquelle jeweils um 120° zueinander phasenverschoben ist, ist die im Sternpunkt fließende Summe dieser Ströme zu jedem Zeitpunkt beinahe gleich null. Die Stromschiene für den Sternpunkt 40 weist daher, um Platz zu sparen, eine geringere Querschnittfläche auf als die Stromschienen 42, 44, 46 für die Stromzufuhr, und zwar ist sie in Axialrichtung dünner als die übrigen Stromschienen 42, 44, 46. Da die Sternpunkt-Stromschiene 40 im in Fig. 1 gezeigten Beispiel zu dünn ist, daß an der inneren Radialfläche ein Formteil der Wicklung aufgeschweißt werden könnte, weist sie anstatt Schweißbuckeln 63 Laschen 60 auf, die sich in Axialrichtung über die radialen Innenflächen der anderen Stromschienen erstrecken. Auf diese Laschen 60 kann z.B. die verlängerte. Lasche 26 eines Formteils 3 aufgeschweißt werden. Zur besseren Anschaulichkeit ist die Stromschiene für den Sternpunkt 40 mit den Laschen 60 in Fig. 2 ohne die anderen Stromschienen dargestellt.

Das in Fig. 1 gezeigte Stromschienenpaket ist zum Anschließen einer Dreiphasenwicklung mit beliebigem Wickelschema geeignet. Das in Fig. 3 gezeigte Stromschienenpaket ist hingegen insbesondere zum Anschließen der Ausführungsform einer Drehstromwicklung mit jeweils vier in Reihe geschalteten Spulen geeignet. Es weist die gleichen Komponenten auf wie das in Fig. 1, insbesondere drei axial geschichtete Stromschienen 42, 44, 46 zum Anschließen der Wicklung an die elektrische Stromzufuhr, welche jeweils als Schweißbuckel 63 ausgebildete Verbindungsstellen 62 aufweisen, sowie eine Stromschiene 40 für den Sternpunkt, welche mit Laschen 60 ausgerüstet ist, die sich über die radiale Innenfläche zumindest einer der Stromschienen erstrecken. Zusätzlich weist es noch eine weitere Schiene, nämlich eine Sektorstück-Stromschiene 48 auf, welche auf der radial innen liegenden Seite des Stromschienenpakets angeordnet ist, wobei die Verbindungsstellen 60 und 62 der übrigen Stromschienen 40, 42, 44, 46 durch entsprechende Ausnehmungen in der Sektorstromschiene 48 zugänglich und mit der Wicklung kontaktierbar sind. Die Sektorstück-Stromschiene 48 ist nicht durchgehend, sondern besteht aus elektrisch voneinander isolierten Sektorstücken. Diese bilden jeweils die im Wickelschema der Fig. 19 mit 48 gekennzeichneten Verbindungsstücke zwischen zwei Paaren von in Reihe geschalteten Spulen. Hierfür werden mit den beiden Enden eines Sektors 48 die verlängerten Laschen 26 von Formteilen 3 der zu verschiedenen Spulenpaaren gehörenden Spulen 52 und 54 verschweißt.

Gemäß einer anderen Ausführungsform sind die Stromschienen nicht axial, sondern radial übereinandergeschichtet, wie in Fig. 5a gezeigt. In dieser Anordnung ist nur eine Stromschiene 46 direkt an die Wickelköpfe angrenzend angeordnet, während die anderen Stromschienen 42, 44 keinen direkten Zugang zur Wicklung haben. Daher sind alle Stromschienen mit Laschen 61 ausgerüstet, welche radial nach innen, ggf. über andere Stromschienen oder über die Wickelköpfe ragen. Zum Anschließen der Wicklung werden diese Laschen 61 z.B. an ihrem Ende nach innen umgebogen und die verlängerte Lasche 26 eines Formteils 3 auf das umgebogene Ende aufgeschweißt. Auch bei diesem Ausführungsbeispiel kann eine in Sektoren unterteilte Stromschiene 48 radial auf der Innenseite des Stromschienenpakets angeordnet werden, oder eine Stromschiene für den Sternpunkt radial auf der Innenseite oder axial über den anderen Stromschienen 42, 44, 46 untergebracht werden.

Die Stromschienen können z.B. durch Ausschneiden eines Rings aus einer Platte hergestellt werden. Hierbei fällt jedoch relativ viel Verschnitt an. Bevorzugt werden die Stromschienen daher durch Biegen aus einem Stab mit geeignetem Querschnitt hergestellt oder aus einzelnen Ringsektoren zusammengesetzt. Fig. 6 zeigt eine solche aus einzelnen Ringsektoren 45 zusammengesetzte Stromschiene 40, 42, 44, 46. Die Sektoren 45 werden an den Verbindungsstellen 43 bevorzugt durch Preßpassen miteinander verbunden, indem z.B. Fortsätze 47 mit Übermaß in entsprechende Ausnehmungen in den Sektorenenden eingepreßt werden. Da die Verbindungsstellen zwischen den Sektoren somit luftdicht abgeschlossen sind, sind sie vor Oxidation geschützt. Vorteilhaft werden die Stromschienen derart zu einem Paket zusammengesetzt, daß die Verbindungsstellen zwischen den Sektoren von übereinander liegenden Stromschienen gegeneinander versetzt angeordnet sind, um die Stabilität des Stromschienenpakets zu erhöhen.

Figur 7 zeigt ein solches Stromschienenpaket aus vier ringförmigen Stromschienen, 40,42,44,46, die aus einzelnen Sektoren 45 aufgebaut sind. Die Verbindungsstellen 43, 43' zwischen den Sektoren der verschiedenen Stromschienen liegen zueinander versetzt, im gezeigten Beispiel liegen zum Beispiel die Verbindungsstellen 43 zwischen Sektoren der in der Zeichnung zuoberst liegenden Stromschiene direkt über den Verbindungsstellen 43 zwischen Sektoren der zweituntersten Stromschiene, während Verbindungsstellen 43' zwischen Sektoren der zweitobersten und der untersten Stromschiene um eine halbe Sektorenlänge hierzu versetzt angeordnet sind. Dies trägt zur mechanischen Stabilität des Stromschienenpakets bei. Im in Figur 7 gezeigten Ausführungsbeispiel weist nur die oben liegende Stromschiene 40 für den Sternpunkt Laschen 61 auf, in anderen Ausführungsbeispielen sind jedoch auch die übrigen Stromschienen mit entsprechenden Laschen zum Kontaktieren der Spulenenden ausgestattet.

Für die Verbindung der Stromschienen 40,42,44,46 zu einem Stromschienenpaket sind verschiedene Methoden möglich. Die Verbindung dient einerseits der mechanischen Stabilisierung und vereinfachten Montage des Stromschienenpakets, andererseits kann beim Verbinden auch gleichzeitig eine elektrische Isolation zwischen den Stromschienen erreicht werden. Dies ist beispielsweise der Fall, wenn die Stromschienen durch einen Kleber verbunden werden, der ein Füllmaterial wie z.B. Glaskügelchen enthält, durch welches die Stromschienen auf Abstand zueinander gehalten werden. Alternativ kann auch eine Papierisolation verwendet werden, die zwischen die Schienen gelegt wird, und daraufhin die Stromschienen unter Druck mit einem geeigneten Klebstoff zusammengeklebt werden. Bevorzugt ist der Klebstoff temperaturfest, um einer eventuellen Erwärmung der Stromschienen aufgrund ohmscher Verluste standzuhalten. Gemäß einer weiteren Alternative werden die Stromschienen bereits vor dem Zusammensetzen isolierenden beschichtet, beispielsweise mit einem Backlack. Hierbei handelt es sich um einen Lack, der sich bei Erhitzung wie ein Klebstoff verhält. Die Stromschienen werden einzeln mit Backlack beschichtet, zu einem Stromschienenpaket zusammengesetzt und daraufhin erwärmt, so daß die übereinanderliegenden Lackschichten verschiedener Stromschienen miteinander verschmelzen.

Im folgenden werden Ausführungsbeispiele solcher Wicklungen erläutert, welche bevorzugt an die beschriebenen Stromschienen angeschlossen werden. Hierbei handelt es sich beispielsweise um eine Formteilwicklung, die im wesentlichen aus L-förmigen Formteilen aufgebaut ist. Die vorstehend beschriebenen Stromschienen eignen sich aber selbstverständlich zum Anschließen einer beliebigen Mehrphasenwicklung.

In den Figuren 8-11 sind die für den Aufbau der bevorzugten Wicklung verwendeten Formteiltypen einzeln vorgestellt und erläutert.

Fig. 8a zeigt eine perspektivische Ansicht eines L-Formteils 1 vom ersten Typ. Ein Schenkel 8a des L-Formteils 1 bildet in der fertigen Wicklung einen Nutstab 8, während der andere Schenkel 6a an der Stirnseite des Ständers liegt und in verschiedenen Nuten liegende Nutstäbe 8 miteinander verbindet. Im folgen haben Nutstäbe bzw. Verbindungsleiter allgemein die Bezugszeichen 8 bzw. 6, während die zu bestimmten Formteiltypen gehörenden Nutstabschenkel und Verbindungsleiterschenkel mit 8a, 8b bzw 6a, 6b bezeichnet werden.

Die Verbindungsleiter 6 sind flacher und breiter ausgebildet als die Nutstäbe 8, wie aus den in Fig. 8b dargestellten Querschnittansichten der beiden Schenkel 6a und 8a ersichtlich ist. Und zwar weisen die Nutstäbe 8 eine Dicke H und eine Breite B auf, wobei die Breite B in dem gezeigten Ausführungsbeispiel so gewählt ist, daß der Nutstab in der Breite jeweils eine Nut ausfüllt. Möglich sind aber auch Ausführungsformen, bei denen in einer Nut mehrere Nutstäbe nebeneinander, d.h. in gleicher Höhe vom Nutboden, zu liegen kommen. Die Dicke h des Verbindungsleiters 6 beträgt beispielsweise ein Drittel der Dicke H des Nutstabs 8, während die Breite b etwa dreimal so groß ist wie die Breite B des Nutstabs 8. Der Leiterquerschnitt ist also in beiden Schenkeln des gezeigten Formteils in etwa gleich.

Das Formteil 1 weist am freien Ende des Nutstabs 8a eine abgeflachte Lasche 10a auf. Bei dem in Figur 8a gezeigten ersten Typ liegt die Lasche 10a auf gleicher Höhe wie der Verbindungsleiter 6a, nämlich auf der in der Zeichnung unten liegenden Seite des Nutstabschenkels 8a. Die (nicht sichtbaren) Unterseiten des Nutstabs 8a, des Verbindungsleiters 6a und eines nahe zum Nutstab 8a liegenden Übergangsbereiches 12 der Lasche 10a liegen also in einer Ebene. Der Übergangsbereich 12 der Lasche 10a weist etwa die gleiche Dicke auf wie der Verbindungsleiter 6a, also ca. ein Drittel der Dicke des Nutstabs. Am äußersten Ende der Lasche 10a befindet sich ein Verbindungsbereich 13, der gegenüber dem Übergangsbereich 12 noch weiter abgeflacht ist, nämlich auf etwa ein Sechstel der Dicke des Nutstabs. Der Übergang zwischen den Bereichen 12 und 13 erfolgt durch eine Stufe auf der Unterseite der Lasche 10a. Der Verbindungsbereich 13 läßt also auf der Unterseite gegenüber der Höhe der Unterseite des Nutstabs 8a einen Raum in Höhe etwa eines Sechstels der Nutstabdikke frei.

Zum Verbinden zweier Formteile wird der Verbindungsbereich 13 der Lasche 10a auf das Ende des Verbindungsleiters eines zweiten Formteils aufgesetzt und mit diesem verbunden, z.B. verschweißt. Der Verbindungsbereich 13 der Lasche 10a ist daher - ebenso wie ein Verbindungsbereich 16 am Ende des Verbindungsleiters 6 - nicht mit einer isolierenden Schicht versehen, was in der Zeichnung durch eine Schraffur gekennzeichnet ist. An den nicht schraffierten Flächen ist Formteil 1, ebenso wie die anderen gezeigten Formteile, isolierend beschichtet. Damit die Verbindungsstelle zwischen zwei Formteilen, die im dicht gepackten Wickelkopfbereich liegt, nicht dicker als ein Verbindungsleiter 6 ist, ist der Verbindungsbereich 16 des Verbindungsleiters 6a auf etwa die Hälfte der Dicke des Verbindungsleiters 6a abgeflacht. Dadurch kann der Laschen-Verbindungsbereich 13 auf einen Verbindungsbereich 16 aufgelegt und verschweißt werden, ohne daß die Dicke des Verbindungsleiters 6 an der Verbindungsstelle überschritten wird. Da der möglichst kurz gehaltene Übergangsbereich 12 und die Verbindung selbst nur etwa ein Drittel der Höhe des Nutstabs 8a aufweisen, liegt dort eine Querschnittsverengung vor, die zugunsten einer dicht gepackten Wickelkopfanordnung der Verbindungsleiter in Kauf genommen wird. Der Übergangsbereich 12 kann vorteilhaft sein, indem er einen Abstand zwischen Nutstäben und Wickelkopfbereich schafft. Er sollte einen möglichst großen Leiterquerschnitt aufweisen. Der Übergangsbereich 12 kann auch als stufenloser Übergang zwischen Nutstab und Verbindungsbereich 13 ausgebildet sein. Bei anderen Ausführungsformen ist der Übergangsbereich 12 weggelassen, dort schließt der Verbindungsbereich 13 direkt an den Nutstab 8 an.

Fig. 9 zeigt einen zweiten Typ eines L-förmigen Formteils 2, welcher zusammen mit dem ersten Typ zur Bildung einer vollständigen Windung einer wendelförmigen Spule verwendet wird. Das Formteil 2 ist im wesentlichen gleich aufgebaut wie das Formteil 1, insbesondere sind die Längen und die Querschnitte B-B und A-A der Verbindungsleiter 6a, 6b und Nutstäbe 8a, 8b der beiden Formteile gleich. Auch bei Formteil 2 ist am freien Ende des Nutstabs 8b eine abgeflachte Lasche 10b angeordnet. Im Gegensatz zur Lasche 10a von Formteil 1 ist die abgeflachte Lasche 10b aber nicht auf gleicher Höhe wie der Verbindungsleiter 6b angeordnet, sondern ist zu der gegenüberliegenden Fläche des Nutstabs 8a versetzt. Und zwar ist die Lasche 10b des Formteils 2 auf der Höhe der (in Fig. 9 oben liegenden) Seite des Nutstabs 8b angeordnet, während der Verbindungsleiter 6b - wie bei Formteil 1 - auf der Höhe der Unterseite des Nutstabs 8b angeordnet ist. Ansonsten ist die Lasche 10b des Formteils 2 gleich ausgebildet wie die Lasche 10a des Formteils 1: Sie weist einen Übergangsbereich 12 auf, der sich direkt an den Nutstab 8b anschließt und etwa so flach wie der Verbindungsleiter 6b ist, und einen noch weiter abgeflachten Verbindungsbereich 13 am äußersten Ende der Lasche 11. Dieser Bereich 13 ist wiederum so flach ausgebildet, daß seine Dicke zusammen mit der Dicke des abgeflachten Verbindungsbereichs 16 eines Verbindungsleiters 6 etwa der Dicke h eines Verbindungsleiters 6 entspricht. Die Stufe zwischen dem Übergangsbereich 12 und dem Verbindungsbereich 13 liegt auf der nach unten weisenden Seite der Lasche 10b, so daß beim zweiten Typ die obere Seite der gesamten Lasche 10b auf der gleichen Höhe wie die obere Seite des Nutstabs 8b liegt.

Fig. 10 zeigt einen dritten Typ eines L-förmigen Formteils 3, welches dazu dient, die Wicklung mit den Stromschienen zu verbinden. Formteil 3 gleicht im Prinzip Formteil 1, weist aber anstatt der Lasche 10a eine verlängerte Lasche 26 auf, welche mit einer Stromschiene verbunden, z.B. verschweißt, wird und daher keine Isolierung aufweist. Die Lasche 26 hat vorzugsweise die gleiche Dicke h wie ein Verbindungsleiter 6. Die Formteile 3 liegen vorteilhaft in der untersten Wicklungslage der Nuten, so daß die verlängerten Laschen 26 ggf. direkt an die unter den Nuten angeordneten Stromschienen angrenzen. Alternativ können die Formteile 3 auch in der obersten Wicklungslage liegen.

In einer anderen bevorzugten Ausführungsform sind die Laschen zum Anschließen der Wicklung an die Stromschienen auf den Stromschienen selbst angeordnet. Es werden dann keine speziell ausgebildeten Formteile 3 vom dritten Typ benötigt, sondern es werden z.B. die Formteile 1 vom ersten Typ mit ihren Laschen 10a auf die verlängerten Laschen 26 der Stromschienen aufgeschweißt.

Fig. 11 zeigt schließlich einen Typ eines U-förmigen Formteils, welcher verwendet wird, um zwei wendelförmige Spulen einer Wicklung in Reihe zu schalten. Das U-förmige Formteil 4 weist zwei Nutstabschenkel 8b, 8b' auf, welche in ihrer Länge und Querschnittform A-A mit den Nutstabschenkeln 8a, 8b der Formteile 1 und 2 übereinstimmen. Beide Nutstäbe 8b, 8b' weisen an ihrem freien Ende eine abgeflachte Lasche 10b auf, welche auf der Höhe der in der Zeichnung oben liegenden Seite des Nutstabs 8b bzw. 8b' angeordnet ist und somit der Lasche 10b des L-Formteils 2 entspricht. Der die beiden Nutstäbe 8b, 8b' verbindende Verbindungsleiter 7 weist die gleiche Querschnittform B-B auf wie die Verbindungsleiter 6a, 6b der Formteile 1 und 2, ist aber um einen Nutabstand länger als diese. Ist z.B. der Verbindungsleiter 6a, 6b der Formteile vom ersten und zweiten Typ so lang, das eine Spule mit in einem Abstand von 5 Nuten liegenden Nutstäben 8 aufgebaut werden kann, so ist der Verbindungsleiter 7 des U-Formteils zwecks Verbindung zweier Spulen länger ausgebildet, hier z.B. so, daß die beiden Nutstabschenkel 8b, 8b' in einem Abstand von 6 Nuten zueinander zu liegen kommen. Eine weitere Besonderheit des Verbindungsleiters 7 ist, daß er in Bezug zu den beiden Nutstabschenkeln 8b, 8b' nicht in ein- und derselben Ebene liegt. Vielmehr liegt er einerseits auf der Höhe der (in der Zeichnung) oberen Seite des einen Nutstabschenkels 8b, andererseits jedoch auf der Höhe der Unterseite des anderen Nutstabschenkels 8b'. Liegen in der fertigen Wicklung beide Nutstabschenkel 8b, 8b' des U-Formteils in der gleichen Wicklungslage, liegt er daher leicht schräg zu der Verbindungslinie zwischen den beiden Nuten mit den Nutstäben 8b, 8b'. Wie durch eine Naht 27 angedeutet, kann das U-förmige Formteil z. B. aus zwei L-förmigen Formteilen hergestellt sein, die am Ende ihrer Verbindungsleiterschenkel abgeflachte Bereiche aufweisen, welche aufeinandergelegt und miteinander verschweißt werden.

Anhand der Fig. 12 bis 14 soll nun der Aufbau einer Wicklung mit überlappenden Spulen aus L-Formteilen erläutert werden. In den Figuren wird hierzu der Aufbau der untersten Wicklungslage mit wenigen Formteilen demonstriert. Die Formteile sind der Einfachheit halber ohne Ständerkörper und auf einer ebenen Fläche liegend dargestellt; in einem Ständerkörper einer Radialfeldmaschine wären die Formteile auf der Innenmantelfläche eines Zylinders angeordnet. Fig. 12 zeigt drei L-förmige Formteile vom Typ 3 mit verlängerten Laschen. Die Formteile 3 liegen in der in den Nuten zuunterst liegenden Wicklungslage und sind um je zwei Nutabstände zueinander versetzt angeordnet, so daß in jeder zweiten Nut der Nutstab 8a eines Formteils 3 zu liegen kommt. Die verlängerten Laschen 26 befinden sich alle an der gleichen Stirnseite des Ständerkörpers und sind dort mit darunter liegenden (nicht dargestellten) Stromschienen verbunden. Auf der anderen Stirnseite des Ständerkörpers sind die Verbindungsleiter 6 schuppenartig übereinandergeschichtet und bilden so eine Lage 28 von Verbindungsleitern. In der Verbindungsleiterlage 28 sind die Verbindungsleiter 6 derart geschichtet, daß sie mit ihrem freien Ende stets oben in der Lage liegen und der Verbindungsbereich 16 frei zugänglich ist, während das andere Ende durch andere Verbindungsleiter 6a verdeckt ist. Der Übergang zwischen Verbindungsleiter 6a und Nutstab 8a des gleichen L-Formteils 3 liegt in dem verdeckten Bereich.

In der Verbindungsleiterlage 28 liegen, wie aus der Zeichnung ersichtlich ist, maximal drei Verbindungsleiter 6a übereinander. Da die Dicke h der Verbindungsleiter 6a in dem gezeigten Ausführungsbeispiel ca. ein Drittel der Dicke H der Nutstäbe 8a beträgt, ist die Verbindungsleiterlage 28 also an keiner Stelle höher als die dazugehörige Lage von Nutstäben 8a.

Im gezeigten Beispiel verbinden die Verbindungsleiter 6a jeweils Nutstäbe im Abstand von fünf Nuten, wie nachfolgend noch erläutert wird. In anderen, nicht gezeigten Ausführungsbeispielen verbinden die Verbindungsleiter Nutstäbe in größerem oder kleinerem Abstand zueinander, so daß auch in der Verbindungsleiterlage jeweils mehr oder weniger als drei Verbindungsleiter übereinander liegen. Bei diesen Wicklungen wird die Dicke h der Verbindungsleiter 6 vorteilhaft so gewählt, daß die Dicke einer Verbindungsleiterlage 28 jeweils der Dicke H eines Nutstabs 8 entspricht. Bei anderen Ausführungsformen, die zum Anschluß an die Stromschienen keinen speziellen Formteiltyp vorsehen, wird bei den ersten Herstellungsschritten gemäß Fig. 6 der erste Formteiltyp verwendet.

Ist in jede zweite Nut entsprechend Fig. 12 ein Formteil 3 eingelegt, wird in die übrigen Nuten je ein Formteil vom zweiten Typ derart eingesetzt, daß sein Verbindungsleiter 6b auf der den Verbindungsleitern 6a der bereits eingesetzten Formteile 3 gegenüberliegenden Stirnseite des Ständerkörpers angeordnet ist (siehe Fig. 13). Der Verbindungsbereich 13 der abgeflachten Lasche 10b des Formteils 2 kommt hierbei auf dem abgeflachten Verbindungsbereich 16 des Verbindungsleiters 6a eines Formteils 3 zu liegen. Das Formteil 2 wird mit dem Formteil 3 an dieser Stelle verbunden, z.B. durch Laserschweißen. Hierbei wird ein ausreichend energiereicher Laserstrahl auf die freiliegende Oberfläche 14 des Verbindungsbereichs 13 der Lasche 10b gerichtet. Das Material des Verbindungsbereichs 13 der Lasche 10b schmilzt dadurch auf und verbindet sich stoffschlüssig mit dem darunterliegenden Verbindungsbereich 16 des Verbindungsleiters 6. Alternativ hierzu ist im Bereich 13 der Lasche 10b ein Schlitz angeordnet, durch den der Laserstrahl direkt auf die Grenzfläche zwischen dem Laschen-Endbereich 13 und der darunterliegenden Verbindungsstelle 16 gerichtet werden kann. Bei dieser Alternative braucht der Laserstrahl also den Laschen-Endbereich 13 nicht in seiner gesamte Dicke aufzuschmelzen. Entsprechend werden auch ggf. die verlängerten Laschen 26 der Formteile 3 auf die Stromschienen aufgeschweißt.

Da der Verbindungsbereich 13 der Lasche 10b des Formteils 2 - wie im Zusammenhang mit Fig. 9 erläutert - auf der Höhe der Oberseite des Nutstabs 8b angeordnet ist, kommt der Nutstab 8b des Formteils 2 in der gleichen Wicklungslage wie die Nutstäbe 8a der Formteile 3 zu liegen, wenn er auf den Verbindungsbereich 16 des Verbindungsleiters 6a aufgesetzt wird. Dadurch wird der Höhenversatz ausgeglichen, der aufgrund der schuppenartigen Schräglage der Verbindungsleiter 6a in der Verbindungsleiterlage 28 entstanden ist.

An der gegenüberliegenden Stirnseite liegt der Verbindungsleiter 6b des Formteils 2 ebenfalls schräg, und zwar an seinem nichtfreien Ende auf gleicher Höhe wie die verlängerten Laschen 26 der Formteile 3, beginnend von dort zu seinem freien Ende ist er aber über diese Laschen geschichtet.

Fig. 14 zeigt die gleiche Wicklungsanordnung wie Fig. 13, bei der noch ein weiteres Formteil 2' entsprechend dem Formteil 2 eingesetzt wurde. Das Formteil 2' ist auf gleiche Weise wie das Formteil 2 mit seinem Laschen-Endbereich 13 am Ende seines Nutstabschenkels 8b' mit dem Verbindungsbereich 16 eines Formteils 3 verbunden. Auf der gegenüberliegenden Stirnseite ist es mit seinem Verbindungsleiter 6b' schuppenartig über den Verbindungsleiter 6b des Formteils 2 geschichtet, so daß der Verbindungsbereich 16 über dem Nutstabende des Formteils 3 zu liegen kommt, mit dem der Laschen-Endbereich 13 des Formteils 2' verbunden ist.

Setzt man nach dem in Fig. 14 gezeigten Schema noch weitere Formteile 2 und 3 jeweils in jede zweite Nut ein, erhält man eine vollständige Wicklungslage von Nutstäben 8. Die Verbindungsleiter der Formteile 2 bzw. 2' bilden dann eine zweite Verbindungsleiterlage 30 ähnlich der Lage 28 auf der anderen Stirnseite. Die Verbindungsleiter 6a, 6b der Formteile 2, 3 liegen jeweils mit ihrem freien Ende in diesen Lagen oben, so daß ihre nicht isolierten Verbindungsstellen 16 nicht von anderen Verbindungsleitern der gleichen Lage verdeckt sind. Die Verbindungsleiterlagen 28 und 30 sind jeweils schräg geschichtet, und zwar so, daß die Verbindungsleiter 6b (in der Perspektive der Zeichnung) von links unten nach rechts oben, die Verbindungsleiter 6a von rechts unten nach links oben verlaufen.

Das Formteil 2 bildet zusammen mit dem zugehörigen Formteil 3 nach Verschweißung eine vollständige Windung einer wendelförmigen Spule. Durch den schräg geschichteten Verbindungsleiter 6b des Formteils 2 wird die Wicklung in die nächsthöhere Wicklungslage überführt. Zum Fortsetzen der Wendel wird ein - in Fig. 14 nicht gezeigtes - Formteil 1 auf das zur ersten Windung gehörige Formteil 3 gelegt und somit eine neue Wicklungslage begonnen. Mit dem Verbindungsbereich 13 der Lasche 10a kommt das Formteil 1 somit auf der Verbindungsstelle 16 des entsprechenden Formteils 2 zu liegen und wird auf die vorstehend beschriebene Weise mit dieser verbunden. Da die Lasche 10a des Formteils 1 auf der Höhe der Unterseite des Nutstabs 8a des Formteils 1 liegt, wird der durch die schräge Schichtung in der Verbindungsleiterlage 30 geschaffene Höhenversatz an dieser Verbindungsstelle nicht ausgeglichen, sondern führt im Gegenteil dazu, daß eine Wendel entsteht. Zur Bildung einer vollständigen Wicklung werden auf sämtliche Formteile 3 Formteile vom Typ 1 gelegt und an entsprechenden Verbindungsstellen 16 der Formteile 2 wiederum durch Schweißen verbunden. Um diese zweite Wicklungslage zu vervollständigen, werden in die übriggebliebenen Nuten, also in jede zweite Nut, weitere Formteile 2 auf die bereits eingesetzten Formteile 2 aufgesetzt und mit den Verbindungsstellen 16 der Formteile 1 durch Schweißen verbunden. Die Verbindungsleiter der Formteile 1 bilden eine weitere Verbindungsleiterlage 28, die gleich aufgebaut ist wie die in Fig. 14 gezeigte Verbindungsleiterlage 28 der Formteile 3. Nach dem Einsetzen und Verbinden der zweiten Wicklungslage sind also mehrere überlappende Spulen mit jeweils zwei Windungen entstanden, deren Verbindungsleiter ineinander verschränkt angeordnet sind.

Die Verschränkung der Verbindungsleiter überlappender Spulen ist schematisch in Fig. 17 dargestellt. Diese zeigt eine schematische Draufsicht auf die Stirnseite eines bewickelten Ständers, wobei die Stirnfläche der Verbindungsleiter 6b vereinfacht als Linien dargestellt sind. Die Verbindungsleiter 6b sind hier in vier schräg geschichteten Lagen 30 übereinander angeordnet. Die Verbindungsleiter 6b der verschiedenen Stränge sind durch unterschiedliche Linienarten gekennzeichnet, z.B. die zu Strang V gehörenden Verbindungsleiter durch durchgezogene Linien, die zu Strang W gehörenden Verbindungsleiter 6b durch strichpunktierte Linien und die zu Strang U gehörenden Verbindungsleiter 6b durch gestrichelte Linien. Innerhalb einer Verbindungsleiterlage 30 wechseln sich die verschiedenen Stränge jeweils ab. Durch Übereinanderschichtung mehrerer gleicher Lagen und die entsprechenden Verbindungen zwischen den Formteilen dieser Lagen entstehen wendelförmige Spulen 50, 52, 50', 52', 50", 52", deren Verbindungsleiter ineinander verschränkt sind. Jeder Verbindungsleiter 6b einer Lage 30 gehört zu einer anderen Spule. Die Verbindungsleiter des Strang V gehören z.B. zu den Spulen 50, 52, die des Strang W zu den Spulen 50', 52' und die Verbindungsleiter des Strang U zu den Spulen 50", 52". Die Spule 52" überlappt auf einer Seite mit den Spulen 52, 52' und auf der anderen Seite mit den Spulen 50, 50'.

Auf der anderen Stirnseite sind die Verbindungsleiter 6a auf entsprechende Weise angeordnet, mit dem Unterschied, daß die Verbindungsleiter 6a der Lage 28 jeweils Nutstäbe der gleichen Wicklungslage verbinden, während die Verbindungsleiter 6b der Lage 30 jeweils Nutstäbe aus übereinanderliegenden Wicklungslagen verbinden, so daß nach jeder Windung ein Wechsel in die nächsthöhere Wicklungslage erfolgt.

Die in Fig. 17 dargestellte Wickelkopfanordnung kann auch bei Wicklungen verwendet werden, die nicht aus L-Formteilen aufgebaut sind, sondern aus beliebigen anderen Formteilen. Auch die Wickelköpfe von Drahtspulen können im Prinzip ineinander verschränkt angeordnet werden, anstatt sich gebündelt an den Stirnseiten auszuweichen. Obwohl Fig. 17 eine dreiphasige Zwei-Loch-Wicklung zeigt, kann selbstverständlich jede beliebige Wicklung einer Wechselstrom- oder Gleichstrommaschine derart ausgeführt werden, daß die Verbindungsleiter überlappender Spulen ineinander verschränkt sind.

Fig. 15 zeigt ebenso wie Fig. 12 bis 14 einen Teil der in den Nuten zuunterst liegenden Wicklungslage. Die Abbildung zeigt jedoch nicht mehr die Idealisierung einer ebenen Abwicklung, sondern einen Ausschnitt eines gekrümmten Ständerkörpers 32 einer Radialfeldmaschine in Innenläuferbauart (oder eines Läuferkörpers in Außenläuferbauart), in dessen Nuten 34 die Formteile 2,3 eingesetzt sind. Damit die eigentliche Wicklung besser sichtbar ist, sind nur die beiden Stirnseiten des Ständerkörpers 32 eingezeichnet. Der Ständerkörper 32 ist selbstverständlich massiv und typischerweise aus Elektroblechen hergestellt, die in Axialrichtung übereinandergeschichtet sind. Die dargestellten Stirnseiten des Ständerkörpers 32 entsprechen also jeweils etwa dem äußersten Blech des Blechpakets.

Die Formteile 2, 3 sind direkt über dem Nutboden in die Nuten 34 eingesetzt. Die Nuten 34 sind an ihrem Kopf 36 verengt, so daß die L-Formteite 2 und 3 nur in Axialrichtung in die Nuten einzuschieben sind. Von der dem Betrachter zugewandten Stirnseite ist bereits eine Lage von Formteilen 3 eingesetzt, von der gegenüberliegenden Stirnseite sind drei Formteile von Typ 2 eingesetzt.

Anhand der Fig. 16 soll nun ein Ausführungsbeispiel der Verschalung von hintereinandergeschalteten Spulen genauer erläutert werden. Die Figur zeigt eine schematische Draufsicht auf die genutete Seite eines Ständer- oder Läuferkörpers - man denke sich hierbei den Ständer- bzw. Läuferkörper wiederum aufgeschnitten und in eine Ebene abgewickelt. Die Verengung der Nuten am Nutkopf ist hier nicht dargestellt, so daß die in den Nuten zuoberst liegende Wicklungslage voll sichtbar ist. Die Nuten sind jeweils von 1 bis 12 durchnumeriert, da das in diesem Beispiel verwendete Wickelschema sich alle 12 Nuten wiederholt.

In dem in Fig. 16 gezeigten Ständerkörper sind nach dem in Figur 12-14 dargestellten Verfahren so viele Lagen von L-Formteilen 1, 2 und ggf. 3 in die Nuten des Ständers bzw. Läufers eingesetzt worden, daß die Nuten mit Ausnahme der obersten Wicklungslage mit Nutstäben aufgefüllt sind. Schließlich werden von der unteren Stirnseite anstatt von L-Formteilen vom Typ 2 U-förmige Formteile vom Typ 4 eingesetzt. In der Zeichnung sind noch nicht alle U-Formteile vollständig eingeschoben. Die schraffiert dargestellten U-Formteile 4 weisen jeweils zwei Nutstäbe 8b und 8b' auf, die in die Nuten 2 und 8, 4 und 10, 6 und 12 eingesetzt werden. In jeder zweiten Nut liegt also ein Nutstabschenkel eines U-Formteils. Die Verbindungsleiter 7 der U-Formteile sind auf der unten liegenden Stirnseite des Ständerkörpers ebenso schuppenartig übereinandergeschichtet wie die Verbindungsleiter 6 der L-Formteile. Die Verbindungsleiter 7 sind aber jeweils um einen Nutabstand länger ausgebildet als die Verbindungsleiter 6 der L-Formteile. Daher kommen die abgeflachten Laschen 10b der Nutstäbe 8b, 8b' der U-Formteile jeweils auf den freiliegenden Enden von zu verschiedenen Spulen gehörenden Verbindungsleitern 6a von Formteilen 1 zu liegen und werden in einem letzten Schritt mit diesen durch Laserschweißen verbunden.

Durch die U-Formteile werden jeweils zwei wendelförmige Spulen in Reihe geschaltet. Dies wird im Folgenden im Zusammenhang mit Fig. 17 näher erläutert. Wie vorstehend erwähnt, zeigt Fig. 17 eine stark schematisierte Darstellung einer Draufsicht auf eine Stirnseite eines bewickelten Ständerkörpers, und zwar die in der Fig. 16 unten liegende Stirnseite. Fig. 17 zeigt die Rücken der in mehreren Lagen 30 übereinandergeschichteten Verbindungsleiter 6b. Zur besseren Veranschaulichung ist die aktuelle Stromrichtung in einem der Stränge durch Pfeile gekennzeichnet. Der als durchgezogene Linie eingezeichnete Strang U beginnt mit einem Anschluß an eine Stromschiene bei Punkt A. Von dort wird der Strang in einer wendelförmigen Spule 50 über vier Wicklungslagen bzw. vier Verbindungsleiterlagen 30 zum Nutkopf geführt. Die gepunktete Linie stellt einen Verbindungsleiter 6 auf der gegenüberliegenden Stirnseite des Läuferkörpers dar. Mit diesem Verbindungsleiter wird ein U-Formteil verbunden, dessen Verbindungsleiter 7 auf der gezeigten Stirnseite verläuft. Durch das U-Formteil werden zwei gleich aufgebaute Spulen 50 und 52 derart in Reihe geschaltet, daß der Strom durch die beiden Spulen gegensinnig fließt, wie durch die Pfeilrichtungen deutlich wird. In der wendelförmigen Spule 52 fließt der Strom demnach in dem gezeigten Augenblick vom Nutkopf zum Nutboden, während er in der Spule 50 von Nutboden zum Nutkopf fließt. Bei Punkt B ist der Strang an den Sternpunkt angeschlossen. Auch die beiden anderen, gestrichelt bzw. strichpunktiert gezeichneten Stränge weisen Anschlüsse an die Stromschienen sowie entsprechende U-Formteile mit Verbindungsleitern 7 auf, die in Fig. 17 nicht eingezeichnet sind.

Fig. 18 zeigt das Wickelschema, nach dem die in den Fig. 8 bis 17 gezeigte Wicklung ausgeführt ist. Es zeigt, wie die einzelnen Spulen in den Nuten des Ständerkörpers verteilt sind, wobei bei dieser Wicklung in jeder Nut nur eine Spulenseite liegt (Einschichtwicklung). Das Wickelschema wiederholt sich alle 12 Nuten. Die Wicklung ist als Dreiphasenwicklung (Drehstromwicklung) mit zwei Nuten je Pol und Strang (Zwei-Loch-Wicklung) ausgeführt. Daraus ergibt sich eine Polteilung von sechs, d.h. die magnetischen Pole liegen in einem Abstand von sechs Nuten zueinander. In einer Durchmesserwicklung wäre demnach auch die Spulenweite, d.h. der in Nuten ausgedrückte Abstand der beiden Spulenseiten einer Spule, gleich sechs. Bei der in Fg. 18 gezeigten Wicklung ist die Spulenweite aber kleiner als die Polteilung, nämlich gleich fünf, es handelt sich also um eine sog. gesehnte Wicklung. Durch die Sehnung wird hier erreicht, daß an den Stirnseiten des Ständerkörpers maximal die Wickelköpfe von drei Spulen aneinander vorbeigeführt werden. Für die vorstehend beschriebenen Ausführungsformen der Wicklung bedeutet das, daß eine kompakt Wickelkopfanordnung erreicht wird, wenn die Dicke h der Verbindungsleiter ein Drittel oder weniger der Dikke H der Nutstäbe beträgt.

Zwecks Anschaulichkeit ist ein Strang V in Fig. 18 fett hervorgehoben. Die anderen Stränge U, W verlaufen entsprechend. Der Strang V umfaßt zwei in Reihe geschaltete Spulen 50, 52, die hier vereinfacht als geschlossene Ringe dargestellt sind - tatsächlich handelt es sich bei ihnen um Wendel mit z.B. acht Windungen. Die Spule 50 ist elektrisch einerseits mit der Stromschiene 44 für Strang V verbunden und andererseits über ein 6 Nuten überbrückendes Verbindungsstück 7, das z.B. Teil eines U-Formteils sein kann, mit der Spule 52. Diese ist elektrisch mit der mit Y gekennzeichneten Stromschiene für den Sternpunkt 40 verbunden. Die augenblickliche Stromrichtung ist durch Pfeile angegeben. Die beiden Spulen 50, 52 liegen mit ihren einander zugewandten Spulenseiten in benachbarten Nuten, so daß der Strom in den beiden benachbarten Nuten in die gleiche Richtung fließt. Zwischen den Spulenseiten einer Spule 50, 52 liegen jeweils 4 Spulenseiten von Spulen anderer Stränge.

Die Anordnung der Wickelköpfe geht aus dem Wickelschema der Fig. 18 nicht hervor. Werden die Verbindungsleiter jedoch wie vorstehend beschrieben kompakt geschichtet, so verbleiben kaum Zwischenräume in dem dicht gepackten "Wickelkopfpaket". Die für die Reihenschaltung zweier Spulen benötigten Verbindungsstücke 7 befinden sich deshalb vorteilhaft entweder am Nutkopf oder am Nutboden, also am Rand des Wickelkopfpakets. Besteht die Wicklung im wesentlichen aus wendelförmigen Spulen, (also Spulen, bei denen sich die Verbindungsleiter in Radialrichtung nicht überschneiden), so werden durch ein Verbindungsstück 7 jeweils zwei Spulen 50, 52 derart in Reihe geschaltet, daß zu einem Zeitpunkt in der einen Spule der Strom in Richtung Nutkopf und in der anderen in Richtung Nutboden fließt. Da die beiden Spulen 50, 52 jedoch bei der oben beschriebenen Schichtung der Verbindungsleiter vom Aufbau her identisch sind, werden die beiden Spulen 50 und 52 durch das Verbindungsstück 7 so in Reihe geschaltet, daß der Strom durch die beiden Wendeln gegensinnig, also mit entgegengesetztem Drehsinn, fließt. Durch diese Hintereinanderschaltung befinden sich automatisch auch die Anschlüsse der Stränge zu den Stromschienen für die Stromzufuhr 42, 44, 46 sowie für den Sternpunkt 40 sämtlich auf einer radialen Seite des Wickelkopfpakets, und zwar auf der anderen Seite wie die Verbindungsstücke. Vorteilhaft sind auf dieser Seite auch die Stromschienen angeordnet.

Alternativ sind jeweils 4 oder eine andere gerade Anzahl von Spulen in Reihe geschaltet, wie in Fig. 19 gezeigt. Das Wickelschema der Fig. 19 gleicht dem der Fig. 18, mit dem einzigen Unterschied, daß jeweils zwei Paare in Reihe geschalteter Spulen wiederum durch ein weiteres Verbindungsstück 48 in Reihe geschaltet sind. Die Verbindungsstücke 48 können gleich ausgebildet sein wie die Verbindungsstücke 7; nach einer anderen Ausführungsform bilden sie - wie nachstehend genauer beschrieben - Sektoren einer zusätzliche Stromschiene.

Fig. 20 zeigt ein Ausführungsbeispiel einer Wicklung in einem Ständer einer elektrischen Radialfeldmaschine mit einem Stromschienenpaket, welches etwa dem in Fig. 5 gezeigten entspricht. Die raumsparende Ausnützung des Platzes auf der Stirnseite des Ständerkörpers 32 durch die Stromschienen 40,42,44,46 wird hier sehr deutlich, ebenso wie die verschränkte Anordnung der Verbindungsleiter 6 überlappender Spulen.

## Patentansprüche

1. Wicklungsaufbau für einen Ständer einer elektrischen Maschine mit einer mehrphasigen Wicklung, umfassend:
- Spulen oder Spulengruppen (50, 52; 54, 56) und
- Stromschienen (42, 44, 46);
**dadurch gekennzeichnet, daß**
in jedem Phasenstrang mehrere Spulen oder Spulengruppen (50, 52; 54, 56) parallelgeschaltet sind,
die Stromschienen (42, 44, 46) am Ständer umlaufen,
wobei die parallelgeschalteten Spulen oder Spulengruppen (50, 52; 54, 56) mit wenigstens jeweils einem Ende an einer der umlaufenden Stromschienen (42, 44, 46) angeschlossen sind, so daß die Stromschienen (42, 44, 46) jeweils einen Leiter bilden, der einen Stromanschluß (49) mit den parallelgeschalteten Spulen oder Spulengruppen (50, 52; 54, 56) eines Phasenstrangs verbindet.

2. Wicklungsaufbau nach Anspruch 1, wobei die elektrische Maschine einen Ständer mit Nuten aufweist und die Stromschienen (42, 44, 46) an einer oder beiden Stimseite(n) des Ständers in Richtung der Nuttiefe unterhalb der Nutöffnungen angeordnet sind.

3. Wicklungsaufbau nach Anspruch 1 oder 2, wobei mehrere Stromschienen (42, 44, 46) nebeneinander angeordnet sind und zu einem Stromschienenpaket verbunden, insbesondere geklebt, sind.

4. Wicklungsaufbau nach einem der vorstehenden Ansprüche, wobei wenigstens eine. Stromschiene (42, 44, 46) aus einzelnen Ringsektoren (45) hergestellt ist.

5. Wicklungsaufbau nach einem der vorstehenden Ansprüche, wobei die Wicklung aus Formteilen (1, 2, 3, 4) zusammengesetzt ist.

6. Wicklungsaufbau nach Anspruch 5, wobei die Stromschienen (42, 44, 46) direkt mit Formteilen (1, 3) der Spulen (50, 52, 54, 56) verbunden sind.

7. Wicklungsaufbau nach einem der vorstehenden Ansprüche, wobei die mit den Stromschienen (42, 44, 46) verbundenen Enden der Spulen oder Spulengruppen (50, 52; 54, 56) sämtlich auf der - in Richtung der Nuttiefe - gleichen Seite der Nutöffnungen angeordnet sind wie die Stromschienen (42, 44, 46).

8. Wicklungsaufbau nach einem der vorstehenden Ansprüche, insbesondere nach Anspruch 2, wobei mehrere oder alle Stromschienen (42, 44, 46) in der Längsrichtung der Nuten nebeneinander geschichtet sind.

9. Wicklungsaufbau nach Anspruch 8, wobei mindestens eine Stromschiene (42, 44, 46) an der den Nutöffnungen zugewandten Seite Erhöhungen (62) aufweist, mit denen Spulenenden verbunden sind.

10. Wicklungsaufbau nach einem der vorstehenden Ansprüche, insbesondere nach Anspruch 2, wobei mehrere oder alle Stromschienen (42, 44, 46) in Richtung der Nuttiefe übereinander geschichtet sind.

11. Wicklungsaufbau nach einem der Ansprüche 8 bis 10, wobei eine Stempunkt-Schiene (40) Laschen (60, 61) aufweist, die sich über die Stromschienen (42, 44, 46) erstrecken und mit denen Spulenenden verbunden sind.

12. Wicklungsaufbau nach einem der vorstehenden Ansprüche, wobei zumindest zwei Spulen (50, 52; 54, 56) in Reihe geschaltet sind und zumindest einige Verbindungsstücke (48) zwischen in Reihe geschalteten Spulen mehrere voneinander isolierte Sektoren (48) bilden.

13. Wicklungsaufbau nach einem der vorstehenden Ansprüche, wobei die Wicklung mehrere überlappende Spulen (52', 52", 50, 50', 50") aufweist, die aus in den Nuten liegenden Nutstäben (8) und aus an den Stirnseiten des Ständers liegenden Verbindungsleitern (6) aufgebaut sind, wobei die Verbindungsleiter (6) flacher als die Nutstäbe (8) ausgebildet sind und die Verbindungsleiter (6) von überlappenden Spulen verschränkt und somit in Lagen angeordnet sind.

## Claims

1. A coil structure for a stand of an electrical machine with a multi-phase coil, comprising:
- inductors or inductor groups (50, 52; 54, 56) and
- bus bars (42, 44, 46)
**characterized in that**
in each phase string, several inductors or inductor groups (50, 52; 54, 56) are parallel connected
the bus bars (42, 44, 46) surround the stand
wherein the parallel connected inductors or inductor groups (50, 52; 54, 56) are connected with at least one end respectively to one of the surrounding bus bars (42, 44, 46), so that the bus bars (42, 44, 46) respectively form a conductor which connects a current connection (49) to the parallel connected inductors or inductor groups (50, 52; 54, 56) of a phase string.

2. A coil structure according to claim 1, wherein the electrical machine comprises a stand with grooves and the bus bars (42, 44, 46) are arranged on one or both front side(s) of the stand in the direction of the groove depth below the groove openings.

3. A coil structure according to either of claims 1 or 2, wherein several bus bars (42, 44, 46) are arranged adjacent to each other and are connected to a bus bar package, in particular by means of adhesion.

4. A coil structure according to any one of the preceding claims, wherein at least one bus bar (42, 44, 46) is produced from individual ring sectors (45).

5. A coil structure according to any one of the preceding claims, wherein the coil is compiled of moulded parts (1, 2, 3, 4).

6. A coil structure according to claim 5, wherein the bus bars (42, 44, 46) are directly connected with moulded parts (1, 3) of the inductors (50, 52; 54, 56).

7. A coil structure according to any one of the preceding claims, wherein the ends of the inductors or inductor groups (50, 52; 54, 56) which are connected to the bus bars (42, 44, 46) are all arranged on the same side of the groove openings as the bus bars (42, 44, 46) - in the direction of the groove depth.

8. A coil structure according to any one of the preceding claims, in particular according to claim 2, wherein several or all bus bars (42, 44, 46) are layered adjacent to each other in the longitudinal direction of the grooves.

9. A coil structure according to any one of the preceding claims, wherein at least one bus bar (42, 44, 46) on the side facing the groove openings comprises elevations (62) with which inductor ends are connected.

10. A coil structure according to any one of the preceding claims, in particular according to claim 2, wherein several or all bus bars (42, 44, 46) are layered one on top of the other in the direction of the groove depth.

11. A coil structure according to any one of claims 8 to 10, wherein a star point bar (40) comprises clips (60, 61) which extend over the bus bars (42, 44, 46) and are connected with the inductor ends.

12. A coil structure according to any one of the preceding claims, wherein at least two inductors (50, 52; 54, 56) are connected in series and at least some connection pieces (48) between inductors which are connected in series form several sectors (48) which are insulated from each other.

13. A coil structure according to any one of the preceding claims, wherein the coil comprises several overlapping inductors (52', 52", 50, 50', 50") which are constructed from the groove protrusion (8) and from the connection conductors (6) which lie on the front sides of the stand, wherein the connection conductors (6) are flatter than the groove protrusion (8) and the connection conductors are entwined with overlapping inductors and thus arranged in layers.

## Revendications

1. Montage d'enroulement pour un stator d'une machine électrique avec un enroulement polyphasé, comprenant :
- des bobines ou des groupes de bobines (50, 52 ; 54, 56) et
- des barres conductrices (42, 44, 46) ;
**caractérisé en ce que**
sur chaque phase, plusieurs bobines ou groupes de bobines (50, 52 ; 54, 56) sont connectés en parallèle,
les barres conductrices (42, 44, 46) font le tour du stator,
les bobines ou les groupes de bobines connectés en parallèle (50, 52 ; 54, 56) étant connectés avec au moins respectivement une extrémité à l'une des barres conductrices faisant le tour (42, 44, 46), de telle sorte que les barres conductrices (42, 44, 46) forment respectivement un conducteur, lequel relie une prise de courant (49) avec les bobines ou les groupes de bobines (50, 52 ; 54, 56) connectés en parallèle d'une phase.

2. Montage d'enroulement selon la revendication 1, la machine électrique présentant un stator avec des rainures et les barres conductrices (42, 44, 46) étant disposées sous les ouvertures de rainures sur l'une ou les deux face(s) frontale(s) du stator, en direction de la profondeur de rainure.

3. Montage d'enroulement selon la revendication 1 ou 2, plusieurs barres conductrices (42, 44, 46) étant disposées les unes à côté des autres et étant reliées en un ensemble de barres conductrices, en particulier par collage.

4. Montage d'enroulement selon l'une des revendications précédentes, au moins une barre conductrice (42, 44, 46) étant fabriquée de différents segments d'anneau (45).

5. Montage d'enroulement selon l'une des revendications précédentes, l'enroulement étant composé d'éléments de forme (1, 2, 3, 4).

6. Montage d'enroulement selon la revendication 5, les barres conductrices (42, 44, 46) étant reliées directement avec les éléments de forme (1, 3) des bobines (50, 52, 54, 56).

7. Montage d'enroulement selon l'une des revendications précédentes, les extrémités des bobines ou groupes de bobines (50, 52 ; 54, 56) reliées avec les barres conductrices (42, 44, 46) étant toutes disposées du même côté des ouvertures de rainures - dans la direction de la profondeur de rainure - que les barres conductrices (42, 44, 46).

8. Montage d'enroulement selon l'une des revendications précédentes, en particulier selon la revendication 2, plusieurs ou toutes les barres conductrices (42, 44, 46) étant empilées les unes sur les autres dans la direction longitudinale des rainures.

9. Montage d'enroulement selon la revendication 8, au moins une barre conductrice (42, 44, 46) présentant des élévations (62) du côté tourné vers les ouvertures de rainures, avec lesquelles les extrémités des bobines sont reliées.

10. Montage d'enroulement selon l'une des revendications précédentes, en particulier selon la revendication 2, plusieurs ou toutes les barres conductrices (42, 44, 46) étant empilées les unes sur les autres dans la direction de la profondeur de rainure.

11. Montage d'enroulement selon l'une des revendications 8 à 10, une barre conductrice à point neutre (40) présentant des pattes (60, 61), lesquelles s'étendent au-dessus des barres conductrices (42, 44, 46) et avec lesquelles les extrémités des bobines sont reliées.

12. Montage d'enroulement selon l'une des revendications précédentes, au moins deux bobines (50, 52 ; 54, 56) étant connectées en série et au moins quelques éléments de raccordement (48) formant plusieurs secteurs (48) isolés les uns des autres entre des bobines connectées en série.

13. Montage d'enroulement selon l'une des revendications précédentes, l'enroulement présentant plusieurs bobines (52', 52", 50, 50', 50") se chevauchant, lesquelles sont constituées de tiges de rainures (8) reposant dans les rainures et de conducteurs de raccordement (6) reposant sur les façades frontales du stator, les conducteurs de raccordement (6) étant formés plus plats que les tiges de rainures (8) et les conducteurs de raccordement (6) étant entrecroisés de bobines se chevauchant et étant ainsi disposés en couches.
